(19) **Europäisches Patentamt / European Patent Office / Office européen des brevets**

(11) **EP 4 572 450 A1**

(12) **EUROPEAN PATENT APPLICATION**
published in accordance with Art. 153(4) EPC

(43) Date of publication:
**18.06.2025 Bulletin 2025/25**

(21) Application number: **22954429.1**

(22) Date of filing: **10.08.2022**

(51) International Patent Classification (IPC):
**H04W 72/00** (2023.01)   **H04L 5/00** (2006.01)
**H04L 27/00** (2006.01)

(52) Cooperative Patent Classification (CPC):
**H04L 5/00; H04L 27/00; H04W 72/00**

(86) International application number:
**PCT/CN2022/111523**

(87) International publication number:
**WO 2024/031454 (15.02.2024 Gazette 2024/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PRECODING INDICATION METHOD AND APPARATUS, AND STORAGE MEDIUM**

(57) The present disclosure relates to a precoding indication method and apparatus, and a storage medium. The precoding indication method is applied to a terminal. The method comprises: sending single downlink control information (S-DCI), wherein the S-DCI is used for scheduling codebook-based PUSCH transmission of a terminal from a plurality of antenna panels to a plurality of transmission reception points (TRPs), a DCI scheduled by the S-DCI carries a transmission precoding matrix indicator (TPMI) indication domain, and the TPMI indication domain is used for indicating TPMIs and/or rank indicators (TRIs) used by the terminal when sending PUSCHs at different antenna panel/TRP/TCI/SRI/-PUSCH transmission occasions (TOs). According the present disclosure, precoding indication can be enhanced while ensuring the flexibility of a terminal.

sending S-DCI, in which the S-DCI is configured to schedule codebook-based PUSCH transmission of a terminal from multiple panels to multiple TRPs, a TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

S11

FIG. 3

**Description**

**FIELD**

The present disclosure relates to the field of communication technologies, and in particular relates to a precoding matrix indication method, a precoding matrix indication apparatus, and a storage medium.

**BACKGROUND**

With the development of communication technologies, in order to ensure coverage, in a case that a network device (e.g. a base station) has multiple transmission reception points (TRPs), multiple TRPs (Multi-TRP)/multiple panels may be used to provide a service for a terminal. Moreover, in order to provide a more balanced quality of service within a service area, a coordinated multiple point transmission (CoMP) technology is introduced.

In the related art, a codebook-based multi-panel uplink simultaneous transmission (STxMP) of the terminal is supported. In the STxMP, the terminal needs to configure at most one sounding reference signal (SRS) resource set for the STxMP. The SRS resource set may be configured with multiple SRS resources, and the network device may feed back a SRS resource indicator (SRI) of $\left\lceil \log_2\left(\tilde{N}_{SRS}\right) \right\rceil$ bits according to a numeric count ($N_{SRS}$) of the SRS resources in the SRS resource set, to select the SRS resource via the SRI. Furthermore, the network device determines a transmission precoding matrix indicator (TPMI) and a rank indicator (RI) actually used by the terminal for transmission and notifies them to the terminal. Data in subsequent uplink transmission of the terminal needs to be precoded using the TPMI and RI specified by the network device, and the precoded data is mapped onto a corresponding antenna port according to spatial relation information corresponding to the SRS resource indicated by the SRI.

In the study of related communication protocols, a physical downlink control channel (PDCCH), a physical uplink control channel (PUCCH) and a physical uplink shared channel (PUSCH) are enhanced.

The PUSCH enhancement based on multiple TRPs may schedule the multiple antenna panel/TRP/transmission configuration indication (TCI)/SRI/PUSCH transmission based on a single PDCCH, such as single downlink control information (S-DCI). In order to support the STxMP of the terminal, it is necessary to consider precoding matrix indication enhancement schemes corresponding to different transmission schemes according to the S-DCI scheduling on the basis of ensuring the flexibility of the terminal.

**SUMMARY**

In order to overcome problems existing in the related art, the present disclosure provides a precoding matrix indication method, a precoding matrix indication apparatus, and a storage medium.

According to a first aspect of embodiments of the present disclosure, there is provided a precoding matrix indication method, which is performed by a network device, and includes:

sending S-DCI, in which the S-DCI is configured to schedule codebook-based PUSCH transmission of a terminal from multiple panels to multiple TRPs, in which a TPMI indication field is carried in DCI scheduled by the S-DCI, and the TPMI indication field indicates TPMIs and/or transmission rank indicators (TRIs) used by the terminal for sending PUSCHs corresponding to different panels/TRPs/TCIs/SRIs/PUSCH transmission occasions (TOs).

In an implementation, the TPMI indication field includes a single TPMI indication field.

In an implementation, a PUSCH transmitted based on a codebook corresponds to a specified number of SRS resource sets, and the codebook-based PUSCH transmission adopts a coherent transmission mode.

In an implementation, codebook parameters corresponding to different panels/TRPs/TCIs/SRIs/PUSCH TOs associated with the SRS resource set are identical, and the codebook parameters are configured to determine a codebook set corresponding to the TPMI indication field.

In an implementation, the TPMI indication field includes multiple TPMI indication fields of a specified number, and different TPMI indication fields in the multiple TPMI indication fields indicate TPMIs for sending PUSCHs corresponding to different panels/TRPs/TCIs/SRIs/PUSCH TOs.

In an implementation, the multiple TPMI indication fields include a first TPMI indication field and a second TPMI indication field; and

an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and

the same TRI includes same TRIs of corresponding codebook subset restrictions in respective TPMI codebook configuration tables of the first TPMI indication field and the second TPMI indication field.

In an implementation, the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and

the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field is determined based on a maximum TPMI combination number corresponding to each TRI of all TRIs specified and supported by the first TPMI indication field.

In an implementation, the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and

the same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an implementation, different TPMI indication fields in the multiple TPMI indication fields indicate different TPMI indexes for sending PUSCHs associated with different panels/TRPs/TCIs/SRIs/PUSCH TOs; and

a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, the first TPMI indication field and the second TPMI indication field correspond to TPMI values of TPMI subsets obtained by renumbering TPMI subsets corresponding to the TRIs indicated respectively according to respective codebook configuration parameters and codebook subset restrictions of the first TPMI indication field and the second TPMI indication field.

In an implementation, a bit number of the first TPMI indication field and a bit number of the second TPMI indication field are determined based on a maximum TPMI combination number corresponding to each TRI of all TRIs specified and supported by each TPMI indication field.

In an implementation, valid TPMI values included in the first TPMI indicator field and valid TPMI values included in the second TPMI indicator field are identical or different.

In an implementation, TPMI codebook configurations, allowed by different panels/TRPs/TCIs/SRIs/PUSCH TOs associated with the first TPMI indication field and the second TPMI indication field, are different from configurations of corresponding codebook subset restrictions.

In an implementation, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an implementation, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

In an implementation, a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

In an implementation, the codebook-based PUSCH transmission from the multiple panels to the multiple TRPs adopts a non-coherent transmission (NC-JT) mode.

According to a second aspect of embodiments of the present disclosure, there is provided a precoding matrix indication method, which is performed by a terminal, and includes: receiving S-DCI, in which the S-DCI is configured to schedule codebook-based PUSCH transmission of the terminal from multiple panels to multiple TRPs, in which a TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

In an implementation, the TPMI indication field includes a single TPMI indication field.

In an implementation, a PUSCH transmitted based on a codebook corresponds to a specified number of SRS resource sets, and the codebook-based PUSCH transmission adopts a coherent transmission mode.

In an implementation, codebook parameters corresponding to different panels/TRPs/TCIs/SRIs/PUSCH TOs associated with the SRS resource set are identical, and the codebook parameters are configured to determine a codebook set corresponding to the TPMI indication field.

In an implementation, the TPMI indication field includes multiple TPMI indication fields of a specified number, and different TPMI indication fields in the multiple TPMI indication fields indicate TPMIs for sending PUSCHs corresponding to different panels/TRPs/TCIs/SRIs/PUSCH TOs.

In an implementation, the multiple TPMI indication fields include a first TPMI indication field and a second TPMI indication field; and

an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and

the same TRI includes same TRIs of corresponding codebook subset restrictions in respective TPMI codebook configuration tables of the first TPMI indication field and the second TPMI indication field.

In an implementation, the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and

the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field is determined based on a maximum TPMI combination number corresponding to each TRI of all TRIs specified and supported by the first TPMI indication field.

In an implementation, the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and

the same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an implementation, different TPMI indication fields in the multiple TPMI indication fields indicate different TPMI indexes for sending PUSCHs associated with different panels/TRPs/TCIs/SRIs/PUSCH TOs; and

a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, the first TPMI indication field and the second TPMI indication field correspond to TPMI values of TPMI subsets obtained by renumbering TPMI subsets corresponding to the TRIs indicated respectively according to respective codebook configuration parameters and codebook subset restrictions of the first TPMI indication field and the second TPMI indication field.

In an implementation, a bit number of the first TPMI indication field and a bit number of the second TPMI indication field are determined based on a maximum TPMI combination number corresponding to each TRI of all TRIs specified and supported by each TPMI indication field.

In an implementation, valid TPMI values included in the first TPMI indicator field and valid TPMI values included in the second TPMI indicator field are identical or different.

In an implementation, TPMI codebook configurations, allowed by different panels/TRPs/TCIs/SRIs/PUSCH TOs associated with the first TPMI indication field and the second TPMI indication field, are different from configurations of corresponding codebook subset restrictions.

In an implementation, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an implementation, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

In an implementation, a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

In an implementation, the codebook-based PUSCH transmission from the multiple panels to the multiple TRPs adopts a non-coherent transmission (NC-JT) mode.

According to a third aspect of embodiments of the present disclosure, there is provided a precoding matrix indication apparatus, which includes:

a sending unit configured to send S-DCI, in which the S-DCI is configured to schedule codebook-based PUSCH transmission of a terminal from multiple panels to multiple TRPs.

A TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

In an implementation, the TPMI indication field includes a single TPMI indication field.

In an implementation, a PUSCH transmitted based on a codebook corresponds to a specified number of SRS resource sets, and the codebook-based PUSCH transmission adopts a coherent transmission mode.

In an implementation, codebook parameters corresponding to different panels/TRPs/TCIs/SRIs/PUSCH TOs associated with the SRS resource set are identical, and the codebook parameters are configured to determine a codebook set corresponding to the TPMI indication field.

In an implementation, the TPMI indication field includes multiple TPMI indication fields of a specified number, and different TPMI indication fields in the multiple TPMI indication fields indicate TPMIs for sending PUSCHs corresponding to different panels/TRPs/TCIs/SRIs/PUSCH TOs.

In an implementation, the multiple TPMI indication fields include a first TPMI indication field and a second TPMI indication field; and

an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and

the same TRI includes same TRIs of corresponding codebook subset restrictions in respective TPMI codebook configuration tables of the first TPMI indication field and the second TPMI indication field.

In an implementation, the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and

the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field is determined based on a maximum TPMI combination number corresponding to each TRI of all TRIs specified and supported by the first TPMI indication field.

In an implementation, the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and

the same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an implementation, different TPMI indication fields in the multiple TPMI indication fields indicate different TPMI indexes for sending PUSCHs associated with different panels/TRPs/TCIs/SRIs/PUSCH TOs; and

a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, the first TPMI indication field and the second TPMI indication field correspond to TPMI values of TPMI subsets obtained by renumbering TPMI subsets corresponding to the TRIs indicated respectively according to respective codebook configuration parameters and codebook subset restrictions of the first TPMI indication field and the second TPMI indication field.

In an implementation, a bit number of the first TPMI indication field and a bit number of the second TPMI indication field are determined based on a maximum TPMI combination number corresponding to each TRI of all TRIs specified and supported by each TPMI indication field.

In an implementation, valid TPMI values included in the first TPMI indicator field and valid TPMI values included in the second TPMI indicator field are identical or different.

In an implementation, TPMI codebook configurations, allowed by different panels/TRPs/TCIs/SRIs/PUSCH TOs associated with the first TPMI indication field and the second TPMI indication field, are different from configurations of corresponding codebook subset restrictions.

In an implementation, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an implementation, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

In an implementation, a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

In an implementation, the codebook-based PUSCH transmission from the multiple panels to the multiple TRPs adopts a non-coherent transmission (NC-JT) mode.

According to a fourth aspect of embodiments of the present disclosure, there is provided a precoding matrix indication apparatus, which includes:

a receiving unit configured to receive S-DCI, in which the S-DCI is configured to schedule codebook-based PUSCH transmission of a terminal from multiple panels to multiple TRPs.

A TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

In an implementation, the TPMI indication field includes a single TPMI indication field.

In an implementation, a PUSCH transmitted based on a codebook corresponds to a specified number of SRS resource sets, and the codebook-based PUSCH transmission adopts a coherent transmission mode.

In an implementation, codebook parameters corresponding to different panels/TRPs/TCIs/SRIs/PUSCH TOs associated with the SRS resource set are identical, and the codebook parameters are configured to determine a codebook set corresponding to the TPMI indication field.

In an implementation, the TPMI indication field includes multiple TPMI indication fields of a specified number, and different TPMI indication fields in the multiple TPMI indication fields indicate TPMIs for sending PUSCHs corresponding to different panels/TRPs/TCIs/SRIs/PUSCH TOs.

In an implementation, the multiple TPMI indication fields include a first TPMI indication field and a second TPMI indication field; and

an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and

the same TRI includes same TRIs of corresponding codebook subset restrictions in respective TPMI codebook configuration tables of the first TPMI indication field and the second TPMI indication field.

In an implementation, the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and

the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field is determined based on a maximum TPMI combination number corresponding to each TRI of all TRIs specified and supported by the first TPMI indication field.

In an implementation, the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and

the same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an implementation, different TPMI indication fields in the multiple TPMI indication fields indicate different TPMI indexes for sending PUSCHs associated with different panels/TRPs/TCIs/SRIs/PUSCH TOs; and

a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, the first TPMI indication field and the second TPMI indication field correspond to TPMI values of TPMI subsets obtained by renumbering TPMI subsets corresponding to the TRIs indicated respectively according to respective codebook configuration parameters and codebook subset restrictions of the first TPMI indication field and the second TPMI indication field.

In an implementation, a bit number of the first TPMI indication field and a bit number of the second TPMI indication field are determined based on a maximum TPMI combination number corresponding to each TRI of all TRIs specified and supported by each TPMI indication field.

In an implementation, valid TPMI values included in the first TPMI indicator field and valid TPMI values included in the second TPMI indicator field are identical or different.

In an implementation, TPMI codebook configurations, allowed by different panels/TRPs/TCIs/SRIs/PUSCH TOs associated with the first TPMI indication field and the second TPMI indication field, are different from configurations of corresponding codebook subset restrictions.

In an implementation, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an implementation, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

In an implementation, a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

In an implementation, the codebook-based PUSCH transmission from the multiple panels to the multiple TRPs adopts a non-coherent transmission (NC-JT) mode.

The technical schemes provided by embodiments of the present disclosure may include the following advantageous effects: the network device sends the S-DCI, the S-DCI is configured to schedule the codebook-based PUSCH transmission of the terminal from the multiple panels to the multiple TRPs, the TPMI indication field is carried in the DCI scheduled by the S-DCI, and the TPMI indication field indicates the TPMIs and/or the TRIs used by the terminal for sending the PUSCHs corresponding to different panels/TRPs/TCIs/SRIs/PUSCH TOs. Therefore, after receiving the S-DCI, the terminal may use corresponding TPMIs and/or TRIs for sending the PUSCHs corresponding to different panels/TRPs/TCIs/SRIs/PUSCH TOs, according to what is indicated by the TPMI indication field, thereby indicating precoding matrix while the S-DCI schedules the codebook-based STxMP in a case of the multiple panel/TRP/TCI transmission, and implementing the enhancement of precoding matrix indication.

It is to be understood that both the foregoing general description and the following detailed description are illustrative and explanatory only and are not restrictive of the present disclosure.

**BRIEF DESCRIPTION OF THE** DRAWINGS

The accompanying drawings, which are incorporated in and constitute a part of this specification, illustrate embodiments consistent with the present disclosure and, together with the description, serve to explain the principles of the present disclosure.

FIG. 1 is a schematic diagram illustrating a wireless communication system according to an illustrative embodiment.
FIG. 2 is a schematic diagram illustrating a multiple panel-multiple transmission and reception point (MP-MTRP) transmission scenario based on an S-DCI scheduling according to an illustrative embodiment.
FIG. 3 is a flow chart illustrating a precoding matrix indication method according to an illustrative embodiment.
FIG. 4 is a flow chart illustrating a precoding matrix indication method according to an illustrative embodiment.
FIG. 5 is a block diagram illustrating a precoding matrix indication apparatus according to an illustrative embodiment.
FIG. 6 is a block diagram illustrating a precoding matrix indication apparatus according to an illustrative embodiment.
FIG. 7 is a block diagram illustrating a precoding matrix indication apparatus according to an illustrative embodiment.
FIG. 8 is a block diagram illustrating a precoding matrix indication apparatus according to an illustrative embodiment.

**DETAILED DESCRIPTION**

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

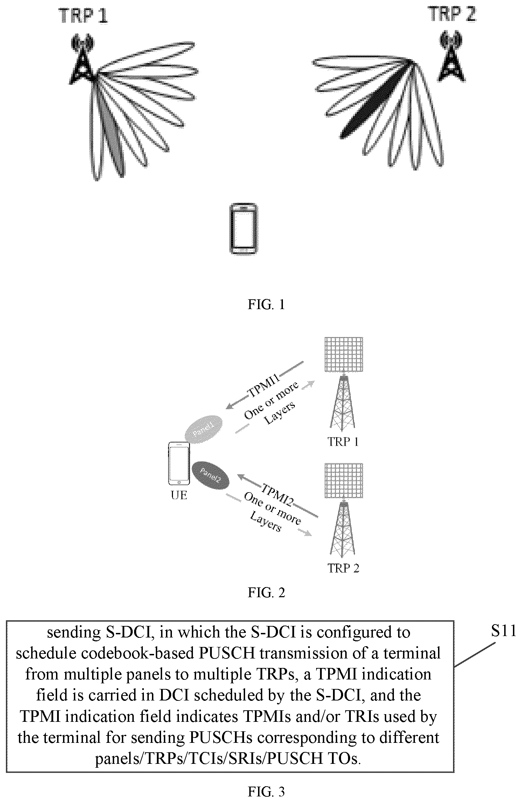

A precoding matrix indication method provided by embodiments of the present disclosure may be applied to a wireless communication system illustrated in FIG. 1. As shown in FIG. 1, the wireless communication system includes a network device and a terminal. The terminal is connected to the network device via a radio resource, and performs data transmission.

It may be understood that the communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in embodiments of the present disclosure.

It may be further understood that the wireless communication system in the embodiment of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5G network, which may also be referred to as a new radio (NR) network, according to the capacity, rate, delay and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved base station (an evolved node B), a home base station, an access point (AP) in a wireless fidelity (WIFI) system, a wireless relay node, a wireless backhaul node, a transmission point (TP), a transmission and reception point (TRP), or the like, or may also be a gNB in a NR system, or may also be a component or a part of a device that constitutes a base station, etc. It is to be understood that the specific technology and specific device form adopted by the network device are not limited in the embodiments of the present disclosure. In the present disclosure, the network device may provide communication coverage for a particular geographic area and may communicate with the terminal located within the coverage area (cell). The network device may also be a vehicle-mounted device when it is used in a vehicle to everything (V2X) communication system.

Further, the terminal involved in the present disclosure, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, some examples of the terminal are a smart phone, a customer premise equipment (CPE), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In the related art, in a case that the network device (e.g. a base station) has multiple TRPs, multiple TRPs/multiple panels may be used to provide a service for the terminal, and the CoMP technology is introduced to realize that the network device may provide a more balanced service quality in a service area.

From the perspective of network morphology, the network is deployed in a manner of a large number of distributed access points and centralized baseband processing, which would be more advantageous to providing a balanced user experience rate, and significantly reduce a delay and signaling overhead caused by the cell handover. As the frequency band increases, relatively dense deployment of access points is also required from the perspective of ensuring the coverage of the network. However, in the high frequency band, as the integration of active antenna devices increases, the use of modular active antenna arrays will be more preferred.

The antenna array of each TRP may be divided into several relatively independent antenna panels, thus a shape and a port number of the whole array may be flexibly adjusted according to a deployment scenario and service requirements. Moreover, the panels or the TRPs may also be connected by optical fibers for a more flexible distributed deployment. In a millimeter wave band, as a wavelength decreases, a blocking effect caused by obstacles such as human bodies or vehicles becomes more significant. In this case, from the perspective of guaranteeing link connection robustness, it is possible to perform transmission/reception from multiple beams of multiple angles using cooperation between multiple TRPs or panels, thereby reducing adverse effects caused by blocking effects.

The CoMP may be divided into coherent and non-coherent transmission according to a mapping relationship of a transmitted signal stream to multiple TRPs/panels. In the coherent transmission, each data layer is mapped to multiple TRPs/panels via a weighting vector. Instead, for the non-coherent transmission, each data stream is mapped to only part of the TRPs/panels. The coherent transmission has a higher demand for synchronization between transmission points and a transmission capability of a backhaul link, and thus is more sensitive to many non-ideal factors in real deployment conditions. In contrast, the non-coherent transmission is less affected by the above factors, thus it is an important consideration for the multi-point transmission technology.

In the present disclosure, the data transmission is performed between the network device and the terminal according to a beam. The enhancement of the PUSCH uplink transmission may be performed between the network device and the terminal according to multiple TRPs/multiple panels. Specifically, an uplink transmission scheme of the PUSCH includes a codebook-based uplink transmission scheme and a non-codebook-based uplink transmission scheme.

In the related art, a codebook-based multi-panel uplink simultaneous transmission (STxMP) of the terminal is supported. In the STxMP, the terminal needs to configure at most one SRS resource set for the STxMP. The SRS resource set may be configured with multiple SRS resources, and the network device may feed back an SRI of $\left\lceil \log_2\left(N_{\text{SRS}}\right)\right\rceil$ bits according to a numeric count ($N_{\text{SRS}}$) of the SRS resources in the SRS resource set, to select the SRS resource via the SRI.

In the following, a method for indicating the multiple SRS resources via the SRI is given by taking tables 1-3 as an example. In tables 1-3, the SRI(s) represents the numeric count of the SRIs, and $N_{\text{SRS}}$ represents the numeric count of the SRS resources.

Table 1

| Bit field mapped to index | SRI(s), $N_{\text{SRS}}$ = 2 |
|---|---|
| 0 | 0 |
| 1 | 1 |

Table 2

| Bit field mapped to index | SRI(s), $N_{\text{SRS}}$ = 3 |
|---|---|
| 0 | 0 |
| 1 | 1 |
| 2 | 2 |
| 3 | reserved |

Table 3

| Bit field mapped to index | SRI(s), $N_{SRS} = 4$ |
|---|---|
| 0 | 0 |
| 1 | 1 |
| 2 | 2 |
| 3 | 3 |

In the current R17 protocol, the definition of a transmission precoding matrix indicator (TPMI) field is shown in the following Table 4:

Table 4

| Code point | SRS resource set | SRI (for non-codebook and codebook)/TPMI (codebook only) field |
|---|---|---|
| 00 | an s-TRP mode and a first SRS resource set (TRP 1) is associated with | a first SRI/TPMI field (a second SRI/TPMI field is not used) |
| 01 | an s-TRP mode and a second SRS resource set (TRP 2) is associated with | a first SRI/TPMI field (a second SRI/TPMI field is not used) |
| 10 | an m-TRP mode and (a first SRS resource set, a second SRS resource set) are associated with | using both a first SRI/TPMI field and a second SRI/TPMI field |
| 11 | an m-TRP mode and (a second SRS resource set, a first SRS resource set) are associated with | using both a first SRI/TPMI field and a second SRI/TPMI field |

In a case that the code point of the SRI indication field is 00, it is used to instruct the terminal to use the s-TRP mode to transmit the PUSCH to the TRP 1, where the first SRS resource set is associated. In the codebook-based transmission mode, the first SRI/TPMI field in the DCI is used to obtain an SRI and a TPMI to be used in this transmission. In the non-codebook-based transmission mode, the first SRI field in the DCI is used to obtain an SRI to be used in this transmission. In this case, the second SRI/TPMI field is not used.

In a case that the code point of the SRI indication field is 01, it is used to instruct the terminal to use the s-TRP mode to transmit the PUSCH to the TRP 2, where the second SRS resource set is associated. In the codebook-based transmission mode, the first SRI/TPMI field in the DCI is used to obtain an SRI and a TPMI to be used in this transmission. In the non-codebook-based transmission mode, the first SRI field in the DCI is used to obtain an SRI to be used in this transmission. In this case, the second SRI/TPMI field is not used.

In a case that the code point of the SRI indication field is 10, it is used to instruct the terminal to use the m-TRP mode to first transmit the PUSCH to the TRP 1 at a first TO, where the first SRS resource set is associated; and then transmit the PUSCH to the TRP 2 at a second TO, where the second SRS resource set is associated. In the codebook-based transmission mode, the first SRI/TPMI field in the DCI is used to obtain an SRI and a TPMI to be used in the transmission to the TRP 1, and the second SRI/TPMI field in the DCI is used to obtain an SRI and a TPMI to be used in the transmission to the TRP 2. In the non-codebook-based transmission mode, the first SRI/TPMI field in the DCI is used to obtain an SRI to be used in the transmission to the TRP 1, and the second SRI/TPMI field in the DCI is used to obtain an SRI to be used in the transmission to the TRP 2.

In a case that the code point of the SRI indication field is 11, it is used to instruct the terminal to use the m-TRP mode to first transmit the PUSCH to the TRP 2 at a first TO, where the second SRS resource set is associated; and then transmit the PUSCH to the TRP 1 at a second TO, where the first SRS resource set is associated. In the codebook-based transmission mode, the second SRI/TPMI field in the DCI is used to obtain an SRI and a TPMI to be used in the transmission to the TRP 2, and the first SRI/TPMI field in the DCI is used to obtain an SRI and a TPMI to be used in the transmission to the TRP 1. In the non-codebook based transmission mode, the second SRI/TPMI field in the DCI is used to obtain an SRI to be used in the transmission to the TRP 2, and the first SRI/TPMI field in the DCI is used to obtain an SRI to be used in the transmission to the TRP 1.

In the codebook-based PUSCH transmission, the network device determines the TPMI and a rank indicator (RI) actually used by the terminal for transmission and notifies them to the terminal. Data in subsequent uplink transmission of the terminal needs to be precoded using the TPMI and RI specified by the network device, and the precoded data is mapped onto a corresponding antenna port according to spatial relation information corresponding to the SRS resource indicated by the SRI.

The following tables 5 to 13 are TPMI tables for indicating the TPMI and the RI.

Table 5

| Bit field mapped to index | codebookSubset = fullyAndPartialAndNonCoherent | Bit field mapped to index | codebookSubset = partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| … | … | … | … | … | … |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| … | … | … | … | … | … |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| … | … | … | … | | |
| 19 | 1 layer: TPMI=11 | 19 | 1 layer: TPMI=11 | | |
| 20 | 2 layers: TPMI=6 | 20 | 2 layers: TPMI=6 | | |
| … | … | … | … | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layers: TPMI=12 | | | | |
| … | … | | | | |
| 47 | 1 layers: TPMI=27 | | | | |
| 48 | 2 layers: TPMI=14 | | | | |
| … | … | | | | |
| 55 | 2 layers: TPMI=21 | | | | |
| 56 | 3 layers: TPMI=3 | | | | |
| … | … | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

Table 6

| Bit field mapped to index | codebookSubset = partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 1 layer: TPMI=13 | 10 | 1 layer: TPMI=13 |
| 11 | 2 layer: TPMI=6 | 11 | 2 layer: TPMI=6 |
| 12 | 1 layer: TPMI=4 | 12-15 | Reserved |
| ... | ... | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| ... | ... | | |
| 29 | 2 layers: TPMI=13 | | |
| 30-31 | Reserved | | |

Table 7

| Bit field mapped to index | codebookSubset = partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 2 layers: TPMI=0 | 4 | 2 layers: TPMI=0 |
| … | … | … | … |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layer: TPMI=6 | 13 | 2 layer: TPMI=6 |
| 14 | 3 layer: TPMI=1 | 14 | 3 layer: TPMI=1 |
| 15 | 1 layer: TPMI=4 | 15 | Reserved |
| … | … | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| … | … | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |
| 36-63 | Reserved | | |

Table 8

| Bit field mapped to index | codebookSubset = fullyAndPartialAndNonCoherent | Bit field mapped to index | codebookSubset= partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI=11 | | |
| 12 | 1 layers: TPMI=12 | 12-15 | reserved | | |
| ... | ... | | | | |
| 27 | 1 layers: TPMI=27 | | | | |
| 28-31 | reserved | | | | |

Table 9

| Bit field mapped to index | codebookSubset= partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | 5-7 | Reserved |
| ... | ... | | |
| 13 | 1 layer: TPMI=12 | | |
| 14 | 1 layer: TPMI=14 | | |
| 15 | 1 layer: TPMI=15 | | |

Table 10

| Bit field mapped to index | codebookSubset = fullyAndPartialAndNonCoherent | Bit field mapped to index | codebookSubset = nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 2 layers: TPMI=0 | 2 | 2 layers: TPMI=0 |
| 3 | 1 layer: TPMI=2 | 3 | reserved |
| 4 | 1 layer: TPMI=3 | | |
| 5 | 1 layer: TPMI=4 | | |
| 6 | 1 layer: TPMI=5 | | |
| 7 | 2 layers: TPMI=1 | | |
| 8 | 2 layers: TPMI=2 | | |
| 9-15 | reserved | | |

Table 11

| Bit field mapped to index | codebookSubset= nonCoherent |
|---|---|
| 0 | 1 layer: TPMI=0 |
| 1 | 1 layer: TPMI=1 |
| 2 | 2 layers: TPMI=0 |
| 3 | 1 layer: TPMI=2 |

Table 12

| Bit field mapped to index | codebookSubset = fullyAndPartialAndNonCoherent | Bit field mapped to index | codebookSubset = nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | | |
| 3 | 1 layer: TPMI=3 | | |
| 4 | 1 layer: TPMI=4 | | |
| 5 | 1 layer: TPMI=5 | | |
| 6-7 | reserved | | |

Table 13

| Bit field mapped to index | codebookSubset= nonCoherent |
|---|---|
| 0 | 1 layer: TPMI=0 |
| 1 | 1 layer: TPMI=1 |
| 2 | 1 layer: TPMI=2 |

(continued)

| Bit field mapped to index | *codebookSubset= nonCoherent* |
|---|---|
| 3 | Reserved |

The expression "bit field mapped to index" represents a bit field mapped to an index, the expression "codebookSubset" represents a codebook subset, and the transmission capability of the codebook subset includes: fullyAndPartialAndNonCoherent (fully coherent transmission), partialAndNonCoherent (partially coherent transmission) and nonCoherent (non-coherent transmission). Taking table 5 as an example, table 5 shows precoding information and a numeric count of layers (i.e. the RI or a TRI to be described later) in the codebook subset corresponding to 4 antenna ports and a maximum rank number of 2 or 3 or 4.

In above tables 5-13, each TPMI indicates a precoding matrix. The following table 14 shows code words corresponding to single-layer transmission of the 4 antenna ports.

Table 14

| TPMI index | *W* ordered from left to right in increasing order of TPMI index | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

In the study of related communication protocols, a PDCCH, a PUCCH and the PUSCH are enhanced.

The PUSCH enhancement based on multiple TRPs may schedule multiple panel/TRP/TCI transmission based on a single PDCCH, such as S-DCI. FIG. 2 is a schematic diagram illustrating a multiple panel-multiple transmission and reception point (MP-MTRP) transmission scenario based on an S-DCI scheduling. Referring to FIG. 2, a terminal sends a TPMI 1 on a panel 1 to the TRP 1 and sends a TPMI 2 on a panel 2 to the TRP 2.

In non-codebook-based and codebook-based M-TRP transmission of R17, an SRI field in DCI indicates an SRS resource in an SRS resource set. Since R17 supports two SRS resource sets, a DCI format 0_1/0_2 includes two SRI fields associated with the two SRS resource sets in non-codebook-based M-TRP PUSCH retransmission. Each SRI field indicates an SRI for a TRP. The design of a first SRI field is based on a framework of R15/16, and all retransmissions use the same RI.

For the non-codebook-based transmission, the first SRI field is configured to determine an element in a second SRI field, and the second SRI field only includes SRI combinations associated with the RI indicated by the first SRI field. A bit number N2 of the second SRI indication field is determined by a maximum codepoint number of each transmission layer in all the transmission layers associated with the first SRI field.

In the codebook-based M-TRP PUSCH retransmission, two TPMI fields are indicated in the DCI format 0_1/0_2, in which a first TPMI field has the same design (including a TPMI index and a RI) as the TPMI field in R15/16, and a second TPMI field only includes a second TPMI index, and a RI of the second TPMI field is the same as the RI indicated by the first TPMI field. The first TPMI field is configured to determine an element in the second TPMI field, and the second TPMI field includes only a TPMI associated with the RI indicated by the first TPMI field. A bit number M2 of the second TPMI field is determined by a maximum codepoint number of each rank in all the ranks associated with the first TPMI field.

In a possible scheme of the related art, the definition of the TPMI indication field is shown in Table 15 below:

Table 15

| Code point | SRS resource set | SRI (for codebook/non-codebook transmission) field/TPMI (for codebook transmission) field |
|---|---|---|
| 00 | an s-TRP transmission mode, and a first SRS resource set (a first TRP) is configured | a first SRI/TPMI field (a second SRI/TPMI field is not used) |
| 01 | an s-TRP transmission mode, and a second SRS resource set (a second TRP) is configured | a second SRI/TPMI field (a second SRI/TPMI field is not used) |
| 10 | an m-TRP transmission mode<br>a first SRI/TPMI field corresponds to a first SRS resource set<br>a second SRI/TPMI field corresponds to a second SRS resource set | using both a first SRI/TPMI field and a second SRI/TPMI field |
| 11 | an m-TRP transmission mode<br>a first SRI/TPMI field corresponds to a first SRS resource set<br>a second SRI/TPMI field corresponds to a second SRS resource set | using both a first SRI/TPMI field and a second SRI/TPMI field |

Table 15 differs from table 4 in that table 15 holds that the first SRI/TPMI field is associated with the first SRS resource set and the second SRI/TPMI field is associated with the second SRS resource set in both the s-TRP and m-TRP transmission modes.

Currently, among the above possible transmission schemes corresponding to different multiplexing modes, one or more of schemes will be defined as optional transmission schemes for scheduling the STxMP of the PUSCH.

In m-TRP uplink PUSCH enhancement of R17, a time-division transmission scheme is supported, in which the terminal performs a PUSCH retransmission by using different beams, i.e. corresponding transmission configuration indication states (TCI states) along different TRP transmission directions in a time-division multiplexing (TDM) mode according to the S-DCI scheduling. The network may configure different associated SRS resource sets for different TRP transmission directions, but requires that rank numbers corresponding to different TOs are identical, and also that numeric counts of SRS resources corresponding to different SRS resource sets are identical and numeric counts of SRS ports are identical, and rank numbers actually allocated corresponding to different TRP directions are also identical, thereby resulting in insufficient flexibility of the terminal.

In R18, the transmission schemes possibly supported by the STxMP include different transmission schemes, for the uplink synchronous transmission of multiple panels/TRPs/TCIs, according to a coordinated transmission scheduling of the S-DCI for a transport block (TB) of the PUSCH, and each transmission scheme is briefly described as follows.

One scheme is a space-division multiplexing (SDM) scheme. A TB of the PUSCH is sent on the same time-frequency resource to two different TRPs via respective corresponding demodulation reference signal (DMRS) ports or port combinations allocated on different panels, and different panels/TRPs/TOs are associated with different TCI states (i.e., beams). On this basis, the SDM scheme is also specifically divided into two types, i.e. SDM-A and SDM-B. In the SDM-A, different parts of a TB of the PUSCH are sent on the same time-frequency resource to two different TRPs via respective corresponding DMRS ports or port combinations allocated on different panels, and different panels/TRPs/TOs are associated with different TCI states (i.e., beams). In the SDM-B, repetitions of the same TB of the PUSCH corresponding to different redundancy versions (RVs) are sent on the same time-frequency resource to two different TRPs via respective corresponding DMRS ports or port combinations allocated on different panels, and different panels/TRPs/TOs are associated with different TCI states (i.e., beams).

Another scheme is a frequency division multiplexing (FDM) scheme. A TB of the PUSCH is sent on a non-overlapping frequency domain resource on the same time domain resource to two different TRPs via the same DMRS ports or port combinations allocated on different panels, and different panels/TRPs/TOs are associated with different TCI states (i.e., beams). On this basis, the FDM scheme is also specifically divided into two types, i.e., FDM-A and FDM-B. In the FDM-A, different parts of a TB of the PUSCH are sent on the non-overlapping frequency domain resource on the same time domain resource to two different TRPs via the same DMRS ports or port combinations allocated on different panels, and different panels/TRPs/TOs are associated with different TCI states (i.e., beams). In the FDM-B, repetitions of the same TB of the PUSCH corresponding to different RV versions are sent on the non-overlapping frequency domain resource on the same time domain resource to two different TRPs via the same DMRS ports or port combinations allocated on different panels, and different panels/TRPs/TOs are associated with different TCI states (i.e., beams).

Yet another scheme is a single frequency network (SFN) multiplexing scheme. A TB of the PUSCH is sent on the same time-frequency resource to two different TRPs via the same DMRS ports or port combinations allocated on different panels, and different panels/TRPs/TOs are associated with different TCI states (i.e., beams).

For the STxMP of the terminal, one or more of the above schemes will be supported.

Therefore, in a case that the codebook-based multi-panel uplink transmission is supported, it is necessary to provide an effective precoding matrix indication method. Regarding a scenario of supporting the codebook-based STxMP of the terminal, it is necessary to consider precoding matrix indication enhancement schemes corresponding to different transmission schemes according to the S-DCI scheduling on the basis of ensuring the flexibility of the terminal.

In a precoding matrix indication method provided by embodiments of the present disclosure, a TPMI indication field is carried in DCI scheduled by S-DCI, and the precoding matrix indication enhancement is performed according to the TPMI indication field.

In an implementation, the network device sends the S-DCI, and the S-DCI is configured to schedule codebook-based PUSCH transmission of the terminal from multiple panels to multiple TRPs. The TPMI indication field is carried in the DCI scheduled by the S-DCI, and the TPMI indication field indicates TPMIs and/or transmission rank indicators (TRIs) used by the terminal for sending PUSCHs corresponding to different panels/TRPs/TCIs/SRIs/PUSCH TOs.

FIG. 3 is a flow chart illustrating a precoding matrix indication method according to an illustrative embodiment. As shown in FIG. 3, the precoding matrix indication method is performed by a network device, and includes the following steps.

In step S11, S-DCI is sent, in which the S-DCI is configured to schedule codebook-based PUSCH transmission of a terminal from multiple panels to multiple TRPs.

In embodiments of the present disclosure, a TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

The uplink PUSCH transmission is transmitted towards multiple TRPs of a base station. For example, in collaborative transmission in a TDM transmission mode, different repetitions of same information on the PUSCH are sent to different TRPs of the base station in a time-division manner via different TOs in a time domain. This method has relatively low requirements on the capability of the terminal, which does not require the capability of supporting simultaneous transmission of beams, and has a relatively large transmission delay.

The TOs are associated with different panel/TRP/TCI/PUSCH directions according to different TRP transmission directions. In an example, a SRI indication field indicates transmission states of multiple TRPs, which correspond to a TRP 1 and a TRP 2, so that a first set of PUSCH TOs are sent to the TRP 1 (a first SRS resource set) and a second set of PUSCH TOs are sent to the TRP 2 (a second SRS resource set).

For PUSCHs facing different panels/TRPs/TCIs in uplink, channels which are actually passed through may have very different spatial characteristics, thus quasi-co-located type Ds (QCL-Ds) of the PUSCHs in different transmission directions is considered to be different.

In embodiments of the present disclosure, the TPMI indication field is carried in the DCI scheduled by the S-DCI, and the TPMI indication field indicates the TPMIs and/or TRIs used by the terminal for sending the PUSCHs corresponding to different panels/TRPs/TCIs/SRIs/PUSCH TOs.

In a precoding matrix indication method provided by embodiments of the present disclosure, the TPMI indication field included in the DCI scheduled by the S-DCI is a single TPMI indication field.

In another precoding matrix indication method provided by embodiments of the present disclosure, the TPMI indication fields included in the DCI scheduled by the S-DCI includes multiple TPMI indication fields.

According to a mapping relationship of a transmitted signal stream to multiple panels/TRPs/TCIs/SRIs/PUSCHs, transmission may be divided into coherent transmission (CJT) and non-coherent transmission (NCJT). In a case of the coherent transmission, each data layer may be mapped on the multiple panels/TRPs/TCIs/SRIs/PUSCHs by a weighting vector. The coherent transmission has higher requirements for synchronization between transmission points, and the transmission capability of a backhaul link.

In embodiments of the present disclosure, in the multiple TPMI indication fields, the codebook-based PUSCH transmission from the multiple panels to the multiple TRPs adopts a non-coherent transmission mode.

In the precoding matrix indication method provided by embodiments of the present disclosure, in a case that the single TPMI indication field is included in the DCI scheduled by the S-DCI, a PUSCH transmitted based on a codebook corresponds to a specified number of SRS resource sets, and the codebook-based PUSCH transmission adopts a coherent transmission mode.

In an example, in embodiments of the present disclosure, in a case that one or two SRS resource sets are configured, and the transmission is the coherent transmission, it is possible to indicate the TPMIs and/or TRIs used by the terminal for sending the PUSCHs corresponding to different panels/TRPs/TCIs/SRIs/PUSCH TOs via the single TPMI indication field included in the DCI scheduled by the S-DCI.

In the precoding matrix indication method provided by embodiments of the present disclosure, in a case that the single TPMI indication field is included in the DCI scheduled by the S-DCI, the codebook-based PUSCH transmission adopts the coherent transmission mode, codebook parameters corresponding to different panels/TRPs/TCIs/SRIs/-PUSCH TOs associated with the SRS resource set are identical. The codebook parameters are configured to determine a codebook set corresponding to the TPMI indication field.

In the precoding matrix indication method provided by embodiments of the present disclosure, in a case that the DCI scheduled by the S-DCI schedules the codebook-based PUSCH transmission of the terminal from the multiple panels to the multiple TRPs, the TPMI indication field includes multiple TPMI indication fields of a specified number.

Different TPMI indication fields in the multiple TPMI indication fields indicate TPMIs for sending PUSCHs corresponding to different panels/TRPs/TCIs/SRIs/PUSCH TOs.

In embodiments of the present disclosure, for convenience of description, any two different TPMI indication fields in the multiple TPMI indication fields included in the TPMI indication field included in the DCI scheduled by the S-DCI are referred to as a first TPMI indication field and a second TPMI indication field.

The first TPMI indication field is associated with a panel/TRP/TCI/SRI/PUSCH TO, and an association relationship between the first TPMI indication field and the panel/TRP/TCI/SRI/PUSCH TO associated with the first TPMI indication field is indicated by a SRS resource set indication field in the DCI.

The second TPMI indication field is associated with a panel/TRP/TCI/SRI/PUSCH TO, in which an association relationship between the second TPMI indication field and the panel/TRP/TCI/SRI/PUSCH TO associated with the second TPMI indication field is indicated by a SRS resource set indication field in the DCI.

In embodiments of the present disclosure, a SRS resource set indication field in the DCI may indicate an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field.

In the precoding matrix indication method provided by embodiments of the present disclosure, the multiple TPMI indication fields carried in the DCI scheduled by the S-DCI include the first TPMI indication field and the second TPMI indication field.

In embodiments of the present disclosure, the first TPMI indication field and the second TPMI indication field are determined according to a TRI corresponding to the panel/TRP/TCI/SRI/PUSCH TO associated with the first TPMI indication field and a TRI corresponding to the panel/TRP/TCI/SRI/PUSCH TO associated with the second TPMI indication field.

In the precoding matrix indication method provided by embodiments of the present disclosure, the TRI corresponding to the panel/TRP/TCI/SRI/PUSCH TO associated with the first TPMI indication field and the TRI corresponding to the panel/TRP/TCI/SRI/PUSCH TO associated with the second TPMI indication field are identical. Regarding a coordinated transmission scheduling mode of SDM/FDM, according to the above tables, a configuration for determining supported TRIs includes the following situations.

A: The TRI corresponding to the panel/TRP/TCI/SRI/PUSCH TO associated with the first TPMI indication field is 1, and the TRI corresponding to the panel/TRP/TCI/SRI/PUSCH TO associated with the second TPMI indication field is 1.

B: The TRI corresponding to the panel/TRP/TCI/SRI/PUSCH TO associated with the first TPMI indication field is 2, and the TRI corresponding to the panel/TRP/TCI/SRI/PUSCH TO associated with the second TPMI indication field is 2.

In the precoding matrix indication method provided by embodiments of the present disclosure, different configurations of codebook subset restrictions are allowed for different panels/TRP/TCI/SRI/PUSCH TO.

In the precoding matrix indication method provided by embodiments of the present disclosure, the TRI corresponding to the panel/TRP/TCI/SRI/PUSCH TO associated with the first TPMI indication field and the TRI corresponding to the panel/TRP/TCI/SRI/PUSCH TO associated with the second TPMI indication field are identical, and the first TPMI indication field and the second TPMI indication field carried in the DCI scheduled by the S-DCI may indicate the TPMIs in a dependent (non-independent) indication mode.

In the precoding matrix indication method provided by embodiments of the present disclosure, the first TPMI indication field carried in the DCI scheduled by the S-DCI indicates a TPMI index and TRI information in a specified codebook configuration table. The second TPMI indication field carried in the DCI scheduled by the S-DCI indicates a TPMI in a TPMI set or a TPMI subset corresponding to a same TRI as a TRI indicated by the first TPMI indication field.

The same TRI includes same TRIs of corresponding codebook subset restrictions in respective TPMI codebook configuration tables of the first TPMI indication field and the second TPMI indication field.

In the precoding matrix indication method provided by embodiments of the present disclosure, the second TPMI indication field carried in the DCI scheduled by the S-DCI indicates the TPMI in the TPMI set or the TPMI subset corresponding to the same TRI as the TRI indicated by the first TPMI indication field. The transmission scheme used by the terminal for sending the PUSCHs corresponding to different panels/TRPs/TCIs/SRIs/PUSCH TOs may be an SDM transmission scheme, or an FDM transmission scheme, or an SFN transmission scheme.

In a case that the SDM transmission scheme is adopted, the TRIs used for sending the PUSCHs corresponding to different panels/TRPs/TCIs/SRIs/PUSCH TOs are identical.

In a case that the FDM/SFN transmission scheme is adopted, the same DMRS ports are used for sending the PUSCHs corresponding to different panels/TRPs/TCIs/SRIs/PUSCH TOs, and the corresponding TRIs are identical.

In the precoding matrix indication method provided by embodiments of the present disclosure, the first TPMI indication field carried in the DCI scheduled by the S-DCI is configured to determine a TPMI specified by the second TPMI indication field according to a codebook configuration parameter and a codebook subset restriction corresponding to the panel/TRP/PUSCH TO/SRS resource set associated with the first TPMI indication field. The second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an example, the first TPMI indicator field indicates the TPMI and the TRI independently in the corresponding codebook configuration table, as defined in R15/16, and the second TPMI indicator field determines the TPMI subset, which includes the same TRI, in the codebook subset corresponding to the panel/TRP/PUSCH TO/SRS resource set in the corresponding codebook configuration table according to the TRI, renumbers elements in the TPMI subset and determines the corresponding TPMI value.

The first TPMI indication field is configured to determine the TPMI specified by the second TPMI indication field according to the codebook configuration parameter and the codebook subset restriction corresponding to the panel/TRP/-PUSCH TO/SRS resource set associated with the first TPMI indication field. The second TPMI indication field only includes the TPMI value of the TPMI subset corresponding to the TRI indicated by the first TPMI indication field in the codebook configuration parameter and the codebook subset restriction corresponding to the second TPMI indication field.

In the precoding matrix indication method provided by embodiments of the present disclosure, a bit number (overhead M bits) of the second TPMI indication field included in the multiple TPMI indication fields is determined based on a maximum TPMI combination number corresponding to each TRI of all TRIs specified and supported by the first TPMI indication field.

In the precoding matrix indication method provided by embodiments of the present disclosure, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an example, for any rank=x, the first K states of the second TPMI field are mapped to K TPMI values of the rank of x indicated by the first TPMI indication field, and the remaining ($2^{M-K}$) TPMI values are reserved values.

In the precoding matrix indication method provided by embodiments of the present disclosure, the first TPMI indication field and the second TPMI indication field carried in the DCI scheduled by the S-DCI indicate the TPMIs by using a non-independent indication mode, and TPMI codebook configurations, allowed by different panels/TRPs/TCIs/SRIs/-PUSCH TOs associated with the first TPMI indication field and the second TPMI indication field, are different from configurations of corresponding codebook subset restrictions.

In the precoding matrix indication method provided by embodiments of the present disclosure, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field. The first TPMI indication field and the second TPMI indication field carried in the DCI scheduled by the S-DCI may indicate the TPMIs and the TRIs in an independent indication mode.

In the precoding matrix indication method provided by embodiments of the present disclosure, the multiple TPMI indication fields carried in the DCI scheduled by the S-DCI include the first TPMI indication field and the second TPMI indication field. The TPMI indication fields corresponding to the panels/TRPs/TCIs/SRIs/PUSCH TOs associated with the first TPMI indication field and the second TPMI indication field independently indicate the TPMIs and the TRIs.

In an example, each TPMI indication field corresponding to a different panel/TRP/TCI/SRI/PUSCH TO performs indication independently, and each TPMI indication field independently indicates the TPMI and the TRI in the corresponding codebook configuration table, as defined in R15/16.

In the precoding matrix indication method provided by embodiments of the present disclosure, the first TPMI indication field and the second TPMI indication field carried in the DCI scheduled by the S-DCI respectively indicate a TPMI and TRI information in a TPMI set or a TPMI subset corresponding to a same TRI or different TRIs.

The different TRIs are different TRIs of corresponding codebook subset restrictions in respective TPMI codebook configuration tables of the first TPMI indication field and the second TPMI indication field; and the same TRI includes same TRIs of corresponding codebook subset restrictions in the respective TPMI codebook configuration tables of the first TPMI indication field and the second TPMI indication field.

In the precoding matrix indication method provided by embodiments of the present disclosure, the first TPMI indication field and the second TPMI indication field respectively indicate the TPMI and the TRI information in the TPMI set or the TPMI subset corresponding to different TRIs. The transmission scheme used by the terminal for sending the PUSCHs corresponding to different panels/TRPs/TCIs/SRIs/PUSCH TOs is the SDM transmission scheme, which may include an SDM-A scheme and an SDM-B scheme. In a case that the SDM transmission scheme is adopted, the TRIs for sending the PUSCHs corresponding to different panels/TRPs/TCIs/SRIs/PUSCH TOs are identical.

In the precoding matrix indication method provided by embodiments of the present disclosure, the first TPMI indication field and the second TPMI indication field carried in the DCI scheduled by the S-DCI respectively indicate the TPMI in the TPMI set or the TPMI subset corresponding to the same TRI. The transmission scheme used by the terminal for sending the PUSCHs corresponding to different panels/TRPs/TCIs/SRIs/PUSCH TOs may be the SDM transmission scheme, or the FDM transmission scheme, or the SFN transmission scheme.

In a case that the SDM transmission scheme is adopted, the TRIs used for sending the PUSCHs corresponding to different panels/TRPs/TCIs/SRIs/PUS CH TOs are identical.

In a case that the FDM/SFN transmission scheme is adopted, the same DMRS ports are used for sending the PUSCHs corresponding to different panels/TRPs/TCIs/SRIs/PUSCH TOs, and the corresponding TRIs are identical.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an example, each TPMI indication field corresponding to a different panel/TRP/TCI/SRI/PUSCH TO performs indication independently, and each TPMI indication field independently indicates the TPMI and the TRI in the corresponding codebook configuration table, as defined in R15/16.

In the precoding matrix indication method provided by embodiments of the present disclosure, the multiple TPMI indication fields carried in the DCI scheduled by the S-DCI include the first TPMI indication field and the second TPMI indication field. The TPMI indication fields corresponding to the panels/TRPs/TCIs/SRIs/PUSCH TOs associated with the first TPMI indication field and the second TPMI indication field independently indicate the TPMI. A TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In the precoding matrix indication method provided by embodiments of the present disclosure, the multiple TPMI indication fields carried in the DCI scheduled by the S-DCI include the first TPMI indication field and the second TPMI indication field.

Different TPMI indication fields in the multiple TPMI indication fields indicate different TPMI indexes for sending the PUSCHs associated with different panels/TRPs/TCIs/SRIs/PUSCH TOs. The TRI supported by the panel/TRP/TCI/SRI/PUSCH TO associated with the first TPMI indication field and the TRI supported by the panel/TRP/TCI/SRI/PUSCH TO associated with the second TPMI indication field are determined based on all rank combination numbers correspondingly included in different TPMI indication fields.

In an implementation, different TPMI indication fields in the multiple TPMI indication fields indicate associated different TPMI information, in which the first TPMI indication field and the second TPMI indication field correspond to TPMI values of TPMI subsets corresponding to TRIs indicated respectively according to respective codebook configuration parameters and the codebook subset restrictions corresponding to the first TPMI indication field and the second TPMI indication field.

In the precoding matrix indication method provided by embodiments of the present disclosure, different TPMI indication fields in the multiple TPMI indication fields indicate associated different TPMI information. The transmission scheme used by the terminal for sending the PUSCHs corresponding to different panels/TRPs/TCIs/SRIs/PUSCH TOs may be the SDM transmission scheme. In a case that the SDM transmission scheme is adopted, the TRIs for sending the PUSCHs corresponding to different panels/TRPs/TCIs/SRIs/PUSCH TOs are identical.

In an implementation, different TPMI indication fields in the multiple TPMI indication fields indicate associated different TPMI information. A bit number of the first TPMI indication field and a bit number of the second TPMI indication field are determined based on a maximum TPMI combination number corresponding to each TRI of all TRIs specified and supported by each TPMI indication field.

In embodiments of the present disclosure, different TPMI indication fields in the multiple TPMI indication fields indicate associated different TPMI information, in which valid TPMI values included in the first TPMI indicator field and valid TPMI values included in the second TPMI indicator field are identical or different.

In an example, the first TPMI indication field and the second TPMI indication field correspond to TPMI values of TPMI subsets corresponding to TRIs indicated respectively according to respective codebook configuration parameters and the codebook subset restrictions of the first TPMI indication field and the second TPMI indication field. The overhead M bits of the first TPMI indication field and the overhead M bits of the second TPMI indication field are determined based on a maximum TPMI combination number corresponding to each TRI of all TRIs specified by the first TPMI indication field. However, the valid TPMI values included in the first TPMI indicator field and the valid TPMI values included in the second TPMI indicator field may be different.

In embodiments of the present disclosure, different TPMI indication fields in the multiple TPMI indication fields indicate associated different TPMI information, in which TPMI codebook configurations, allowed by different panels/TRPs/TCIs/SRIs/PUSCH TOs associated with the first TPMI indication field and the second TPMI indication field, are different from configurations of corresponding codebook subset restrictions.

In an example, each TPMI indication field corresponding to a different panel/TRP/TCI/SRI/PUSCH TO performs indication independently, i.e., determining the TPMI subset, which includes the same TRI, in the corresponding codebook subset in the codebook configuration table corresponding to the panel/TRP/TCI/SRI/PUSCH TO according to the TRI, renumbering the TPMI subset and determining the corresponding TPMI value.

In the precoding matrix indication method provided by embodiments of the present disclosure, in embodiments of the present disclosure, the TPMI indication field includes multiple TPMI indication fields of a specified number, in which the first TPMI indication field is configured to determine the TPMI specified by the second TPMI indication field according to the codebook configuration parameter and the codebook subset restriction corresponding to the panel/TRP/PUSCH TO/SRS resource set associated with the first TPMI indication field; and the second TPMI indication field indicates the TPMI value of the another TPMI subset obtained by renumbering the TPMI subset, corresponding to the TRI indicated by the first TPMI indication field, in the codebook configuration parameter and the codebook subset restriction associated with the second TPMI indication field.

In the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an example, for any rank=x, the first K states of the second TPMI field are mapped to K TPMI values of the rank of x indicated by the first TPMI indication field, and the remaining ($2^{M-K}$) TPMI values are reserved values.

In the precoding matrix indication method provided by embodiments of the present disclosure, the TPMI indication fields corresponding to the panels/TRPs/TCIs/SRIs/PUSCH TOs associated with the first TPMI indication field and the second TPMI indication field indicate the TPMI independently. In a case that the TRI supported by the panel/TRP/TCI/SRI/PUSCH TO associated with the first TPMI indication field and the TRI supported by the panel/TRP/TCI/SRI/PUSCH TO associated with the second TPMI indication field are determined based on all rank combination numbers correspondingly included in different TPMI indication fields, the rank combination number may be indicated according to rank combination indication information. The rank combination indication information may be indicated via other indication fields different from the TPMI indication field.

In the precoding matrix indication method provided by embodiments of the present disclosure, the rank combination number may be indicated by at least one of:

A: DMRS indication field enhancement;
B: other reserved codepoints; or
C: adding a 1-bit independent indication field.

In an example, in embodiments of the present disclosure, it is distinguished whether the scheme is the SDM scheme by code points. In a case that the scheme is the SDM scheme and the standard only supports one SDM scheme, it is necessary to distinguish the DMRS ports or port combinations corresponding to different panels/TRPs/TCIs via other methods. For example, the following predefining method may be adopted.

For example, an "antenna ports" indication field in a DCI signaling indicates the total number of data layers, i.e., a rank number. The rank only aims at the allocation of rank>1 in a uplink DMRS table, and the rank combinations on different panels are determined in a default or predefined manner, so as to respectively specifically determine the allocation of DMRS ports corresponding to different beam directions.

In response to not supporting a rank combination of 1+3/3+1, the PUSCH transmission corresponding to two panels/TRPs/TCIs actually supports rank combinations of 1+1 (a total number of layers is 2), 1+2 (a total number of layers is 3), 2+1 (a total number of layers is 3) and 2+2 (a total number of layers is 4). In a case that a corresponding indicated total rank number is 2/4, numeric counts of DMRS ports correspondingly allocated to panel#1 and panel#2 in sequence may be determined respectively in a default manner, i.e., for example, the ports indicated by the DCI signaling are specifically DMRS ports = {2, 3}, and thus, by default, the DMRS port of panel#1 is {2} and the DMRS port of panel#2 is {3}.

In a case that the DMRS port corresponding to a rank of 3 is to be allocated, the same number of rows needs to be added to the table and the following scheme is adopted:

adopting a default mode and adding information definition of indication (adding one column), in which the column information indicates whether the rank combination is 1+2 or 2+1, and the DMRS ports correspond to different panels in a sequential manner; or, the column information directly indicates the DMRS port of panel#1 (more flexible). The bit number of the DCI corresponding to the DMRS table after adding is unchanged, and hence the overhead is not increased.

An enhancement mode of the DMRS indication field is provided. In a case of DMRS type 2 and a single symbol, rank=3, and indication may be performed, for example, as shown in tables 16 and 17 below.

Table 16

| Value | Number of DMRS CDM group(s) without data | DMRS port(s) |
|---|---|---|
| 0 | 2 | 0-2 |
| 1 | 3 | 0-2 |
| 2 | 3 | 3-5 |
| 3 | 2 | 0-2 |
| 4 | 3 | 0-2 |
| 5 | 3 | 3-5 |
| 6-15 | Reserved | Reserved |

In an example, it may be default and predefined that indexes 0-2 indicate a combination of 1+2, indexes 3-5 correspond to a combination of 2+1, and the ports are allocated sequentially.

Table 17

| Value | Number of DMRS CDM group(s) without data | DMRS port(s) | Additional Indication |
|---|---|---|---|
| 0 | 2 | 0-2 | 1+2 |
| 1 | 3 | 0-2 | 1+2 |
| 2 | 3 | 3-5 | 1+2 |
| 3 | 2 | 0-2 | 2+1 |
| 4 | 3 | 0-2 | 2+1 |
| 5 | 3 | 3-5 | 2+1 |
| 6-15 | Reserved | Reserved | |

In an example, the corresponding information explicitly indicates that the indexes 0-2 indicate the combination of 1+2, and the indexes 3-5 correspond to the combination of 2+1.

In the precoding matrix indication method provided by embodiments of the present disclosure, the TRI corresponding to the panel/TRP/TCI/SRI/PUSCH TO associated with the first TPMI indication field is different from the TRI corresponding to the panel/TRP/TCI/SRI/PUSCH TO associated with the second TPMI indication field. Regarding a coordinated transmission scheduling mode of the SDM, according to the above tables, the configuration condition for determining supported TRIs includes 6 combinations, and the following conditions are supported.

A: The TRI corresponding to the panel/TRP/TCI/SRI/PUSCH TO associated with the first TPMI indication field is 1, and the TRI corresponding to the panel/TRP/TCI/SRI/PUSCH TO associated with the second TPMI indication field is 3.

B: The TRI corresponding to the panel/TRP/TCI/SRI/PUSCH TO associated with the first TPMI indication field is 3, and the TRI corresponding to the panel/TRP/TCI/SRI/PUSCH TO associated with the second TPMI indication field is 1.

Regarding the coordinated transmission scheduling mode of the SDM, according to the above tables, the configuration condition for determining supported TRI includes 4 combinations, and the following conditions are not supported.

A: The TRI corresponding to the panel/TRP/TCI/SRI/PUSCH TO associated with the first TPMI indication field is 1, and the TRI corresponding to the panel/TRP/TCI/SRI/PUSCH TO associated with the second TPMI indication field is 3.

B: The TRI corresponding to the panel/TRP/TCI/SRI/PUSCH TO associated with the first TPMI indication field is 3, and the TRI corresponding to the panel/TRP/TCI/SRI/PUSCH TO associated with the second TPMI indication field is 1.

Regarding a coordinated transmission scheduling mode of the FDM, according to the above tables, the configuration condition for determining supported TRIs includes the following conditions.

A: The TRI corresponding to the panel/TRP/TCI/SRI/PUSCH TO associated with the first TPMI indication field is 1, and the TRI corresponding to the panel/TRP/TCI/SRI/PUSCH TO associated with the second TPMI indication field is 1.

B: The TRI corresponding to the panel/TRP/TCI/SRI/PUSCH TO associated with the first TPMI indication field is 2, and the TRI corresponding to the panel/TRP/TCI/SRI/PUSCH TO associated with the second TPMI indication field is 2.

In the precoding matrix indication method provided by embodiments of the present disclosure, the multiple TPMI indication fields carried in the DCI scheduled by the S-DCI include the first TPMI indication field and the second TPMI indication field. The TPMI indication fields corresponding to the panels/TRPs/TCIs/SRIs/PUSCH TOs associated with the first TPMI indication field and the second TPMI indication field independently indicate the TPMI and the TRI.

In an example, each TPMI indication field corresponding to a different panel/TRP/TCI/SRI/PUSCH TO performs indication independently, and each TPMI indication field independently indicates the TPMI and the TRI in the corresponding codebook configuration table, as defined in R15/16.

In the precoding matrix indication method provided by embodiments of the present disclosure, the first TPMI indication field and the second TPMI indication field carried in the DCI scheduled by the S-DCI respectively indicate the TPMI and the TRI information in the TPMI set or the TPMI subset corresponding to the same TRI or different TRIs.

The different TRIs are different TRIs of corresponding codebook subset restrictions in respective TPMI codebook configuration tables of the first TPMI indication field and the second TPMI indication field; and the same TRI includes the same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an example, each TPMI indication field corresponding to a different panel/TRP/TCI/SRI/PUSCH TO performs indication independently, and each TPMI indication field independently indicates the TPMI and the TRI in the corresponding codebook configuration table, as defined in R15/16.

In the precoding matrix indication method provided by embodiments of the present disclosure, the multiple TPMI indication fields carried in the DCI scheduled by the S-DCI include the first TPMI indication field and the second TPMI indication field. The TPMI indication fields corresponding to the panels/TRPs/TCIs/SRIs/PUSCH TOs associated with the first TPMI indication field and the second TPMI indication field independently indicate the TPMI. The TRI supported by the panel/TRP/TCI/SRI/PUSCH TO associated with the first TPMI indication field and the TRI supported by the panel/TRP/TCI/SRI/PUSCH TO associated with the second TPMI indication field are determined based on all rank combination numbers correspondingly included in different TPMI indication fields.

In the precoding matrix indication method provided by embodiments of the present disclosure, the multiple TPMI indication fields carried in the DCI scheduled by the S-DCI include the first TPMI indication field and the second TPMI indication field.

Different TPMI indication fields in the multiple TPMI indication fields indicate different TPMI indexes for sending PUSCHs associated with different panels/TRPs/TCIs/SRIs/PUSCH TOs. The TRI supported by the panel/TRP/TCI/SRI/PUSCH TO associated with the first TPMI indication field and the TRI supported by the panel/TRP/TCI/SRI/PUSCH TO associated with the second TPMI indication field are determined based on all rank combination numbers correspondingly included in different TPMI indication fields.

In an implementation, different TPMI indication fields in the multiple TPMI indication fields indicate associated different TPMI information, in which the first TPMI indication field and the second TPMI indication field correspond to TPMI values of TPMI subsets corresponding to TRIs indicated respectively according to respective codebook configuration parameters and the codebook subset restrictions of the first TPMI indication field and the second TPMI indication field.

In an implementation, different TPMI indication fields in the multiple TPMI indication fields indicate associated different TPMI information, in which the bit number of the first TPMI indication field and the bit number of the second TPMI indication field are determined based on the maximum TPMI combination number corresponding to each TRI of all TRIs specified and supported by each TPMI indication field.

In embodiments of the present disclosure, different TPMI indication fields in the multiple TPMI indication fields indicate associated different TPMI information, in which the valid TPMI values included in the first TPMI indicator field and the valid TPMI values included in the second TPMI indicator field are identical or different.

In an example, the first TPMI indication field and the second TPMI indication field correspond to TPMI values of TPMI subsets corresponding to TRIs indicated respectively according to respective codebook configuration parameters and the codebook subset restrictions of the first TPMI indication field and the second TPMI indication field. The overhead M bits of the first TPMI indication field and the overhead M bits of the second TPMI indication field are determined based on the maximum TPMI combination number corresponding to each TRI of all TRIs specified by the first TPMI indication field. However, the valid TPMI values included in the first TPMI indicator field and the valid TPMI values included in the second TPMI indicator field may be different.

In embodiments of the present disclosure, different TPMI indication fields in the multiple TPMI indication fields indicate associated different TPMI information, in which the TPMI codebook configurations, allowed by different panels/TRPs/TCIs/SRIs/PUSCH TOs associated with the first TPMI indication field and the second TPMI indication field, are different from configurations of corresponding codebook subset restrictions.

In an example, each TPMI indication field corresponding to a different panel/TRP/TCI/SRI/PUSCH TO performs indication independently, i.e., determining the TPMI subset, which includes the same TRI, in the corresponding codebook subset in the codebook configuration table corresponding to the panel/TRP/TCI/SRI/PUSCH TO according to the TRI, renumbering the TPMI subset and determining the corresponding TPMI value.

In the precoding matrix indication method provided by embodiments of the present disclosure, in embodiments of the present disclosure, the TPMI indication field includes multiple TPMI indication fields of a specified number, in which the first TPMI indication field is configured to determine the TPMI specified by the second TPMI indication field according to the codebook configuration parameter and the codebook subset restriction corresponding to the panel/TRP/PUSCH TO/SRS resource set associated with the first TPMI indication field; and the second TPMI indication field indicates the TPMI value of another TPMI subset obtained by renumbering the TPMI subset, corresponding to the TRI indicated by the first TPMI indication field, in the codebook configuration parameter and the codebook subset restriction associated with the second TPMI indication field.

In the another TPMI subset obtained after renumbering, regarding the specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an example, for any rank=x, the first K states of the second TPMI field are mapped to the K TPMI values of the rank of x indicated by the first TPMI indication field, and the remaining ($2^{M-K}$) TPMI values are reserved values.

In the precoding matrix indication method provided by embodiments of the present disclosure, the TPMI indication fields corresponding to the panels/TRPs/TCIs/SRIs/PUSCH TOs associated with the first TPMI indication field and the second TPMI indication field indicate the TPMI independently. In a case that the TRI supported by the panel/TRP/TCI/SRI/PUSCH TO associated with the first TPMI indication field and the TRI supported by the panel/TRP/TCI/SRI/PUSCH TO associated with the second TPMI indication field are determined based on all rank combination numbers correspondingly included in different TPMI indication fields, the rank combination number may be indicated according to the rank combination indication information. The rank combination indication information may be indicated via other indication fields different from the TPMI indication field.

In the precoding matrix indication method provided by embodiments of the present disclosure, the rank combination number may be indicated by at least one of:

A: DMRS indication field enhancement;

B: other reserved codepoints of any possible indication field in a DCI field or a new reserved codepoint after the indication field is extended;

C: adding a 1-2-bit independent indication field; or

D: a numeric count of code words (CW) supported.

In an example, in embodiments of the present disclosure, in a case that the TRI corresponding to the panel/TRP/TCI/SRI/PUSCH TO associated with the first TPMI indication field is different from the TRI corresponding to the panel/TRP/TCI/SRI/PUSCH TO associated with the second TPMI indication field, a manner of determining the rank combination number may adopt a manner in a case that the TRI corresponding to the panel/TRP/TCI/SRI/PUSCH TO associated with the first TPMI indication field is the same as the TRI corresponding to the panel/TRP/TCI/SRI/PUSCH TO associated with the second TPMI indication field, which will not be repeated herein.

In the precoding matrix indication method provided by embodiments of the present disclosure, an enhanced design is performed on the TPMI in the precoding according to the codebook-based STxMP characteristics of the PUSCH, taking into account the flexibility and overhead of the design to better support the implementation of the STxMP characteristics.

Based on the same concept, embodiments of the present disclosure also provide a precoding matrix indication method performed by the terminal.

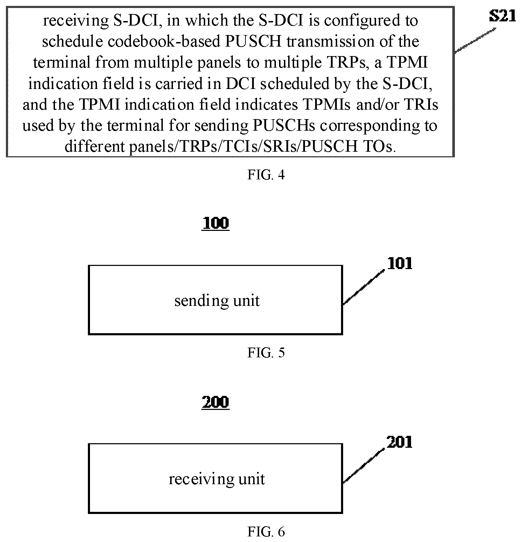

FIG. 4 is a flow chart illustrating a precoding matrix indication method according to an illustrative embodiment. As shown in FIG. 4, the precoding matrix indication method is performed by a terminal, and includes the following steps.

In step S21, S-DCI is received, in which the S-DCI is configured to schedule codebook-based PUSCH transmission of the terminal from multiple panels to multiple TRPs.

A TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

In embodiments of the present disclosure, the TPMI indication field is carried in the DCI scheduled by the S-DCI, and the TPMI indication field indicates the TPMIs and/or the TRIs used by the terminal for sending the PUSCHs corresponding to different panels/TRPs/TCIs/SRIs/PUSCH TOs.

In an implementation, the TPMI indication field included in the DCI scheduled by the S-DCI is a single TPMI indication field.

In an implementation, the TPMI indication fields included in the DCI scheduled by the S-DCI includes multiple TPMI indication fields.

In embodiments of the present disclosure, a PUSCH transmitted based on a codebook corresponds to a specified number of SRS resource sets, and the codebook-based PUSCH transmission adopts a coherent transmission mode.

According to a mapping relationship of a transmitted signal stream to multiple panels/TRPs/TCIs/SRIs/PUSCHs, transmission may be divided into coherent transmission (CJT) and non-coherent transmission (NCJT). In a case of the coherent transmission, each data layer may be mapped on the multiple panels/TRPs/TCIs/SRIs/PUSCHs by a weighting vector. The coherent transmission has higher requirements for synchronization between transmission points, and the transmission capability of a backhaul link.

In embodiments of the present disclosure, in a case that the TPMI indication field included in the DCI scheduled by the S-DCI includes the single TPMI indication field, codebook parameters corresponding to different panels/TRPs/TCIs/SRIs/PUSCH TOs associated with the SRS resource set are identical, and the codebook parameters are configured to determine a codebook set corresponding to the TPMI indication field.

In embodiments of the present disclosure, in a case that the DCI scheduled by the S-DCI schedules the codebook-based PUSCH transmission of the terminal from the multiple panels to the multiple TRPs, the TPMI indication field includes multiple TPMI indication fields of a specified number. Different TPMI indication fields in the multiple TPMI indication fields indicate TPMIs for sending the PUSCHs corresponding to the different panels/TRPs/TCIs/SRIs/PUSCH TOs.

In an implementation, in a case that the TPMI indication field included in the DCI scheduled by the S-DCI includes multiple TPMI indication fields of the specified number, the multiple TPMI indication fields may include a first TPMI indication field and a second TPMI indication field.

An association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field included in the multiple TPMI indication fields indicates a TPMI index and TRI information in a specified codebook configuration table; and the second TPMI indication field included in the multiple TPMI indication fields indicates a TPMI in a TPMI set or a TPMI subset corresponding to a same TRI as a TRI indicated by the first TPMI indication field. The same TRI includes same TRIs of corresponding codebook subset restrictions in respective TPMI codebook configuration tables of the first TPMI indication field and the second TPMI indication field.

In an implementation, the first TPMI indication field included in the multiple TPMI indication fields is configured to determine a TPMI specified by the second TPMI indication field according to a codebook configuration parameter and a codebook subset restriction corresponding to the panel/TRP/PUSCH TO/SRS resource set associated with the first TPMI indication field. The second TPMI indication field included in the multiple TPMI indication fields indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field included in the multiple TPMI indication fields is determined based on a maximum TPMI combination number corresponding to each TRI of all TRIs specified and supported by the first TPMI indication field.

In embodiments of the present disclosure, the multiple TPMI indication fields include the first TPMI indication field and the second TPMI indication field. The first TPMI indication field and the second TPMI indication field respectively indicate a TPMI and TRI information in a TPMI set or a TPMI subset corresponding to a same TRI or different TRIs. The different TRIs are different TRIs of corresponding codebook subset restrictions in respective TPMI codebook configuration tables of the first TPMI indication field and the second TPMI indication field. The same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In embodiments of the present disclosure, the multiple TPMI indication fields include the first TPMI indication field and the second TPMI indication field. Different TPMI indication fields in the multiple TPMI indication fields indicate different TPMI indexes for sending PUSCHs associated with different panels/TRPs/TCIs/SRIs/PUSCH TOs; and a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, different TPMI indication fields in the multiple TPMI indication fields indicate to associated different TPMI information, in which the first TPMI indication field and the second TPMI indication field correspond to TPMI values of TPMI subsets corresponding to the TRIs indicated respectively according to respective codebook configuration parameters and codebook subset restrictions of the first TPMI indication field and the second TPMI indication field.

In an implementation, different TPMI indication fields in the multiple TPMI indication fields indicate associated different TPMI information, in which a bit number of the first TPMI indication field and a bit number of the second TPMI indication field are determined based on a maximum TPMI combination number corresponding to each TRI of all TRIs specified and supported by each TPMI indication field.

In embodiments of the present disclosure, different TPMI indication fields in the multiple TPMI indication fields indicate associated different TPMI information, in which valid TPMI values included in the first TPMI indicator field and valid TPMI values included in the second TPMI indicator field are identical or different.

In embodiments of the present disclosure, different TPMI indication fields in the multiple TPMI indication fields indicate associated different TPMI information, in which TPMI codebook configurations, allowed by different panels/TRPs/TCIs/SRIs/PUSCH TOs associated with the first TPMI indication field and the second TPMI indication field, are different from configurations of corresponding codebook subset restrictions.

In embodiments of the present disclosure, the TPMI indication field includes multiple TPMI indication fields of a specified number, in which the first TPMI indication field is configured to determine the TPMI specified by the second TPMI indication field according to the codebook configuration parameter and the codebook subset restriction corresponding to the panel/TRP/PUSCH TO/SRS resource set associated with the first TPMI indication field; and the second TPMI indication field indicates the TPMI value of another TPMI subset obtained by renumbering the TPMI subset, corresponding to the TRI indicated by the first TPMI indication field, in the codebook configuration parameter and the codebook subset restriction associated with the second TPMI indication field. In the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In embodiments of the present disclosure, in the multiple TPMI indication fields, the TRI corresponding to the panel/TRP/TCI/SRI/PUSCH TO associated with the first TPMI indication field is the same as the TRI corresponding to the panel/TRP/TCI/SRI/PUSCH TO associated with the second TPMI indication field.

In embodiments of the present disclosure, in the multiple TPMI indication fields, the TRI corresponding to the panel/TRP/TCI/SRI/PUSCH TO associated with the first TPMI indication field is different from the TRI corresponding to the panel/TRP/TCI/SRI/PUSCH TO associated with the second TPMI indication field.

In embodiments of the present disclosure, in the multiple TPMI indication fields, the codebook-based PUSCH transmission from the multiple panels to the multiple TRPs adopts a NC-JT mode.

It should be noted that the execution procedure of the precoding matrix indication method performed by the terminal in embodiments of the present disclosure is similar to the execution procedure of the precoding matrix indication method performed to the network device. For details, reference may be made to the description of the above related embodiments, which will not be repeated here.

The precoding matrix indication method provided by the present disclosure is suitable for the process of interaction between the terminal and the network device to implement the precoding information indication. In the methods for the interaction between the terminal and the network device to implement the precoding information indication, the terminal and the network device respectively have the functions to implement the steps of the precoding matrix indication methods involved in above embodiments, which will not be repeated here.

It should be noted that those skilled in the art may understand that the various implementations/examples involved in these embodiments of the present disclosure may be used in conjunction with the aforementioned embodiments or may be used independently. The principles of implementation are similar, no matter whether used alone or in conjunction with the aforementioned embodiments. In the implementation of the present disclosure, some embodiments are described in terms of being implemented and used together. Of course, those skilled in the art may understand that such illustrations do not limit embodiments of the present disclosure.

Based on the same concept, embodiments of the present disclosure also provide a precoding matrix indication apparatus.

It may be understood that, the precoding matrix indication apparatus provided by the embodiments of the present disclosure includes corresponding hardware structures and/or software modules for performing various functions in order to implement the above-mentioned functions. The embodiments of the present disclosure may be implemented in a form of hardware or a combination of hardware and computer software, in combination with units and algorithm steps of each example disclosed in the embodiments of the present disclosure. Whether a function is performed by hardware or by hardware driven by computer software depends on specific applications and design constraints of the technical scheme. Those skilled in the art may use different methods to implement the described functions for each specific application, but such an implementation should not be regarded as extending beyond the scope of the technical schemes of the embodiments of the present disclosure.

FIG. 5 is a block diagram illustrating a precoding matrix indication apparatus according to an illustrative embodiment. Referring to FIG. 5, the precoding matrix indication apparatus 100 includes a sending unit 101.

The sending unit 101 is configured to send S-DCI, and the S-DCI is configured to schedule codebook-based PUSCH transmission of a terminal from multiple panels to multiple TRPs.

A TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

In an implementation, the TPMI indication field includes a single TPMI indication field.

In an implementation, a PUSCH transmitted based on a codebook corresponds to a specified number of SRS resource sets, and the codebook-based PUSCH transmission adopts a coherent transmission mode.

In an implementation, codebook parameters corresponding to different panels/TRPs/TCIs/SRIs/PUSCH TOs associated with the SRS resource set are identical, and the codebook parameters are configured to determine a codebook set corresponding to the TPMI indication field.

In an implementation, the TPMI indication field includes multiple TPMI indication fields of a specified number, and different TPMI indication fields in the multiple TPMI indication fields indicate TPMIs for sending PUSCHs corresponding to different panels/TRPs/TCIs/SRIs/PUSCH TOs.

In an implementation, the multiple TPMI indication fields include a first TPMI indication field and a second TPMI indication field; and
an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and
the same TRI includes same TRIs of corresponding codebook subset restrictions in respective TPMI codebook configuration tables of the first TPMI indication field and the second TPMI indication field.

In an implementation, the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and
the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field is determined based on a maximum TPMI combination number corresponding to each TRI of all TRIs specified and supported by the first TPMI indication field.

In an implementation, the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and
the same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an implementation, different TPMI indication fields in the multiple TPMI indication fields indicate different TPMI indexes for sending PUSCHs associated with different panels/TRPs/TCIs/SRIs/PUSCH TOs; and

a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, the first TPMI indication field and the second TPMI indication field correspond to TPMI values of TPMI subsets corresponding to the TRIs indicated respectively according to respective codebook configuration parameters and codebook subset restrictions of the first TPMI indication field and the second TPMI indication field.

In an implementation, a bit number of the first TPMI indication field and a bit number of the second TPMI indication field are determined based on a maximum TPMI combination number corresponding to each TRI of all TRIs specified and supported by each TPMI indication field.

In an implementation, valid TPMI values included in the first TPMI indicator field and valid TPMI values included in the second TPMI indicator field are identical or different.

In an implementation, TPMI codebook configurations, allowed by different panels/TRPs/TCIs/SRIs/PUSCH TOs associated with the first TPMI indication field and the second TPMI indication field, are different from configurations of corresponding codebook subset restrictions.

In an implementation, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an implementation, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

In an implementation, a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

In an implementation, the codebook-based PUSCH transmission from the multiple panels to the multiple TRPs adopts a NC-JT mode.

Based on the same concept, embodiments of the present disclosure also provide a precoding matrix indication apparatus.

FIG. 6 is a block diagram illustrating a precoding matrix indication apparatus according to an illustrative embodiment. Referring to FIG. 6, the precoding matrix indication apparatus 200 includes a receiving unit 201.

The receiving unit 201 is configured to receive S-DCI, and the S-DCI is configured to schedule codebook-based PUSCH transmission of a terminal from multiple panels to multiple TRPs.

A TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

In an implementation, the TPMI indication field includes a single TPMI indication field.

In an implementation, a PUSCH transmitted based on a codebook corresponds to a specified number of SRS resource sets, and the codebook-based PUSCH transmission adopts a coherent transmission mode.

In an implementation, codebook parameters corresponding to different panels/TRPs/TCIs/SRIs/PUSCH TOs associated with the SRS resource set are identical, and the codebook parameters are configured to determine a codebook set corresponding to the TPMI indication field.

In an implementation, the TPMI indication field includes multiple TPMI indication fields of a specified number, and different TPMI indication fields in the multiple TPMI indication fields indicate TPMIs for sending PUSCHs corresponding to different panels/TRPs/TCIs/SRIs/PUSCH TOs.

In an implementation, the multiple TPMI indication fields include a first TPMI indication field and a second TPMI indication field; and

an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

In an implementation, the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and

the same TRI includes same TRIs of corresponding codebook subset restrictions in respective TPMI codebook configuration tables of the first TPMI indication field and the second TPMI indication field.

In an implementation, the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and

the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

In an implementation, a bit number of the second TPMI indication field is determined based on a maximum TPMI combination number corresponding to each TRI of all TRIs specified and supported by the first TPMI indication field.

In an implementation, the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and

the same TRI includes same TRIs of corresponding codebook subset restrictions in the respective TPMI codebook configuration tables of the first TPMI indication field and the second TPMI indication field.

In an implementation, different TPMI indication fields in the multiple TPMI indication fields are respectively associated with TPMI indexes and TRI information of corresponding codebook subset restrictions in respective TPMI codebook configuration tables of the different TPMI indication fields.

In an implementation, different TPMI indication fields in the multiple TPMI indication fields indicate different TPMI indexes for sending PUSCHs associated with different panels/TRPs/TCIs/SRIs/PUSCH TOs; and

a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly included in different TPMI indication fields.

In an implementation, the first TPMI indication field and the second TPMI indication field correspond to TPMI values of TPMI subsets corresponding to the TRIs indicated respectively according to respective codebook configuration parameters and codebook subset restrictions of the first TPMI indication field and the second TPMI indication field.

In an implementation, a bit number of the first TPMI indication field and a bit number of the second TPMI indication field are determined based on a maximum TPMI combination number corresponding to each TRI of all TRIs specified and supported by each TPMI indication field.

In an implementation, valid TPMI values included in the first TPMI indicator field and valid TPMI values included in the second TPMI indicator field are identical or different.

In an implementation, TPMI codebook configurations, allowed by different panels/TRPs/TCIs/SRIs/PUSCH TOs associated with the first TPMI indication field and the second TPMI indication field, are different from configurations of corresponding codebook subset restrictions.

In an implementation, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

In an implementation, a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

In an implementation, a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

In an implementation, the codebook-based PUSCH transmission from the multiple panels to the multiple TRPs adopts a NC-JT mode.

It should be noted that various modules/units involved in the precoding matrix indication apparatus 100 and the precoding matrix indication apparatus 200 involved in embodiments of the present disclosure are only illustrative and do not intend to limit the present disclosure. For example, the precoding matrix indication apparatus 100 in embodiments of the present disclosure may further include a receiving unit and/or a processing unit. The precoding matrix indication apparatus 200 may also include a sending unit and/or a processing unit. The units included in the precoding matrix indication apparatus 100 and the precoding matrix indication apparatus 200 may interact with each other, and may also interact with other network element devices.

Regarding the apparatuses in above embodiments, the specific manner in which each module performs operations has been described in detail in embodiments related to the method, and will not be described in detail here.

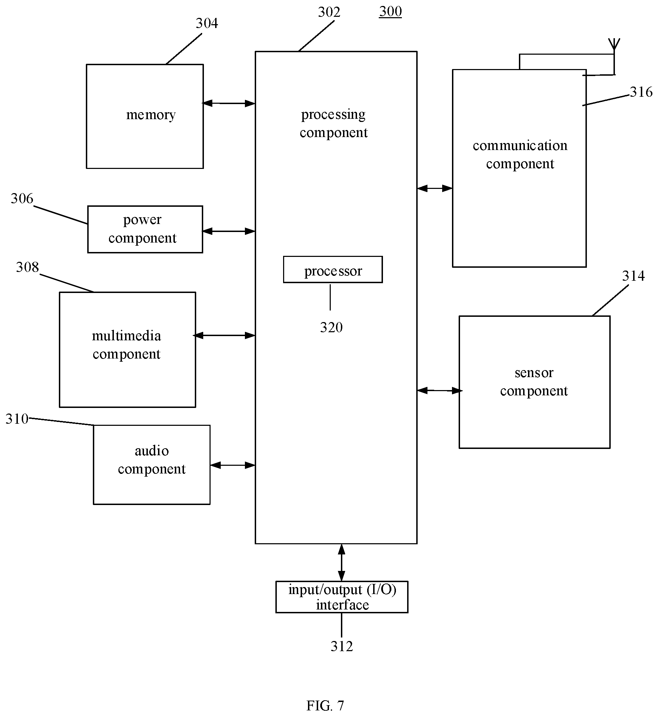

FIG. 7 is a block diagram illustrating a precoding matrix indication apparatus 300 according to an illustrative embodiment. For example, the apparatus 300 may be a mobile phone, a computer, a digital broadcast terminal, a messaging device, a game console, a tablet device, a medical device, a fitness device, a personal digital assistant, or the like.

Referring to FIG. 7, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slides, and gestures on the touch panel. The touch sensors may not only sense a boundary of a touch or slide action, but also sense a period of time and a pressure associated with the touch or slide action. In some embodiments, the multimedia component 308 includes a front camera and/or a rear camera. The front camera and/or the rear camera may receive an external multimedia datum while the apparatus 300 is in an operation mode, such as a photographing mode or a video mode. Each of the front camera and the rear camera may be a fixed optical lens system or have a focus and an optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the apparatus 300. For instance, the sensor component 314 may detect an on/off status of the apparatus 300, relative positioning of components, e.g., the display and the keypad, of the apparatus 300, a change in position of the apparatus 300 or a component of the apparatus 300, a presence or absence of user contact with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate wired or wireless communication between the apparatus 300 and other devices. The apparatus 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

In an illustrative embodiment, there is also provided a non-transitory computer readable storage medium including instructions, such as the memory 304 including instructions, and the instructions are executable by the processor 320 in the apparatus 300, for completing the above methods. For example, the non-transitory computer-readable storage medium may be a ROM, a random access memory (RAM), a CD-ROM, a magnetic tape, a floppy disc, an optical data storage device, and the like.

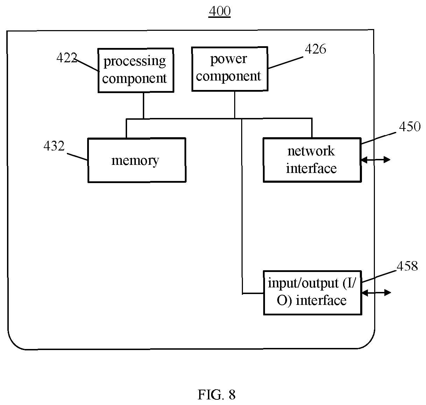

FIG. 8 is a block diagram illustrating a precoding matrix indication apparatus 400 according to an illustrative embodiment. For example, the apparatus 400 may be provided as a server. Referring to FIG. 8, the apparatus 400 includes a processing component 422 including one or more processors and a memory resource represented by a memory 432. The memory 432 is configured to store instructions executable by the processing component 422, such as an application program. The application program stored in the memory 432 may include one or more modules each corresponding to a set of instructions. In addition, the processing component 422 is configured to execute instructions so as to implement the methods.

The apparatus 400 may also include a power component 426 configured to perform power management of the apparatus 400, a wired or wireless network interface 450 configured to connect the apparatus 400 to a network, and an input/output (I/O) interface 458. The apparatus 400 may operate an operating system stored in the memory 432, such as Windows ServerTM, Mac OS XTM, UnixTM, LinuxTM, FreeBSDTM or similar operating systems.

It is further understood that "a plurality" in the present disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that associated objects are in an "or" relationship. "A/an" and "the" in singular forms are intended to include plural forms, unless clearly indicated in the context otherwise.

It is further understood that terms such as "first" and "second" are used to describe various information, these information should not be limited by these terms. These terms are only used for distinguishing information of the same type from each other and do not denote a particular order or degree of importance. As a matter of fact, the terms such as "first" and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles of the present disclosure and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

**Claims**

1. A precoding matrix indication method, performed by a network device, comprising:

sending single downlink control information (S-DCI), wherein the S-DCI is configured to schedule codebook-based physical uplink shared channel (PUSCH) transmission of a terminal from a plurality of panels to a plurality of transmission reception points (TRPs),
wherein a transmission precoding matrix indicator (TPMI) indication field is carried in DCI scheduled by the S-DCI, and the TPMI indication field indicates TPMIs and/or transmission rank indicators (TRIs) used by the terminal for sending PUSCHs corresponding to different panels/TRPs/transmission configuration indications (TCIs)/sounding reference signal resource indicators (SRIs)/PUSCH transmission occasions (TOs).

2. The method of claim 1, wherein the TPMI indication field comprises a single TPMI indication field.

3. The method of claim 2, wherein a PUSCH transmitted based on a codebook corresponds to a specified number of sounding reference signal (SRS) resource sets, and the codebook-based PUSCH transmission adopts a coherent transmission mode.

4. The method of claim 2 or 3, wherein codebook parameters corresponding to different panels/TRPs/TCIs/SRIs/-PUSCH TOs associated with the SRS resource set are identical, and the codebook parameters are configured to determine a codebook set corresponding to the TPMI indication field.

5. The method of claim 1, wherein the TPMI indication field comprises a plurality of TPMI indication fields of a specified number, and different TPMI indication fields in the plurality of TPMI indication fields indicate TPMIs for sending PUSCHs corresponding to different panels/TRPs/TCIs/SRIs/PUSCH TOs.

6. The method of claim 5, wherein the plurality of TPMI indication fields comprise a first TPMI indication field and a second TPMI indication field; and
an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

7. The method of claim 6, wherein the first TPMI indication field indicates a TPMI index and TRI information in a specified codebook configuration table;

   the second TPMI indication field indicates a TPMI in a TPMI set or a TPMI subset corresponding to a same TRI as a TRI indicated by the first TPMI indication field; and
   the same TRI comprises same TRIs of corresponding codebook subset restrictions in respective TPMI codebook configuration tables of the first TPMI indication field and the second TPMI indication field.

8. The method of claim 6 or 7, wherein the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and
the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

9. The method of any one of claims 6 to 8, wherein a bit number of the second TPMI indication field is determined based on a maximum TPMI combination number corresponding to each TRI of all TRIs specified and supported by the first TPMI indication field.

10. The method of claim 6, wherein the first TPMI indication field and the second TPMI indication field respectively indicate a TPMI index and TRI information in a TPMI set or a TPMI subset corresponding to a same TRI or different TRIs;

    the different TRIs are different TRIs of corresponding codebook subset restrictions in respective TPMI codebook configuration tables of the first TPMI indication field and the second TPMI indication field; and
    the same TRI comprises same TRIs of corresponding codebook subset restrictions in the respective TPMI codebook configuration tables of the first TPMI indication field and the second TPMI indication field.

11. The method of claim 10, wherein different TPMI indication fields in the plurality of TPMI indication fields are respectively associated with TPMI indexes and TRI information of corresponding codebook subset restrictions in respective TPMI codebook configuration tables of the different TPMI indication fields.

12. The method of claim 6, wherein different TPMI indication fields in the plurality of TPMI indication fields indicate different TPMI indexes for sending PUSCHs associated with different panels/TRPs/TCIs/SRIs/PUSCH TOs; and
a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly comprised in different TPMI indication fields.

13. The method of claim 12, wherein the first TPMI indication field and the second TPMI indication field correspond to TPMI values of TPMI subsets obtained by renumbering TPMI subsets corresponding to the TRIs indicated respectively according to respective codebook configuration parameters and codebook subset restrictions of the first TPMI indication field and the second TPMI indication field.

14. The method of claim 13, wherein a bit number of the first TPMI indication field and a bit number of the second TPMI indication field are determined based on a maximum TPMI combination number corresponding to each TRI of all TRIs specified and supported by each TPMI indication field.

15. The method of any one of claims 6 to 14, wherein valid TPMI values comprised in the first TPMI indicator field and valid TPMI values comprised in the second TPMI indicator field are identical or different.

16. The method of any one of claims 6 to 15, wherein TPMI codebook configurations, allowed by different panels/TRPs/TCIs/SRIs/PUSCH TOs associated with the first TPMI indication field and the second TPMI indication field, are different from configurations of corresponding codebook subset restrictions.

17. The method of claim 8 or 13, wherein, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

18. The method of any one of claims 6 to 17, wherein a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

19. The method of any one of claims 10 to 16, wherein a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

20. The method of any one of claims 5 to 19, wherein the codebook-based PUSCH transmission from the plurality of panels to the plurality of TRPs adopts a non-coherent transmission (NC-JT) mode.

21. A precoding matrix indication method, performed by a terminal, comprising:

receiving single downlink control information (S-DCI), wherein the S-DCI is configured to schedule codebook-based physical uplink shared channel (PUSCH) transmission of the terminal from a plurality of panels to a plurality of transmission reception points (TRPs),
wherein a transmission precoding matrix indicator (TPMI) indication field is carried in DCI scheduled by the S-DCI, and the TPMI indication field indicates TPMIs and/or transmission rank indicators (TRIs) used by the terminal for sending PUSCHs corresponding to different panels/TRPs/transmission configuration indications (TCIs)/sounding reference signal resource indicators (SRIs)/PUSCH transmission occasions (TOs).

22. The method of claim 21, wherein the TPMI indication field comprises a single TPMI indication field.

23. The method of claim 22, wherein a PUSCH transmitted based on a codebook corresponds to a specified number of sounding reference signal (SRS) resource sets, and the codebook-based PUSCH transmission adopts a coherent transmission mode.

24. The method of claim 22 or 23, wherein codebook parameters corresponding to different panels/TRPs/TCIs/SRIs/-PUSCH TOs associated with the SRS resource set are identical, and the codebook parameters are configured to determine a codebook set corresponding to the TPMI indication field.

25. The method of claim 21, wherein the TPMI indication field comprises a plurality of TPMI indication fields of a specified number, and different TPMI indication fields in the plurality of TPMI indication fields indicate TPMIs for sending PUSCHs corresponding to different panels/TRPs/TCIs/SRIs/PUSCH TOs.

26. The method of claim 25, wherein the plurality of TPMI indication fields comprise a first TPMI indication field and a second TPMI indication field; and

an association relationship between the first TPMI indication field and a panel/TRP/TCI/SRI/PUSCH TO associated with the first TPMI indication field, and/or an association relationship between the second TPMI indication field and a panel/TRP/TCI/SRI/PUSCH TO associated with the second TPMI indication field are indicated by a SRS resource set indication field in the DCI.

27. The method of claim 26, wherein the first TPMI indication field indicates a TPMI index and TRI information in a specified codebook configuration table;

the second TPMI indication field indicates a TPMI in a TPMI set or a TPMI subset corresponding to a same TRI as a TRI indicated by the first TPMI indication field; and
the same TRI comprises same TRIs of corresponding codebook subset restrictions in respective TPMI codebook configuration tables of the first TPMI indication field and the second TPMI indication field.

28. The method of claim 26 or 27, wherein the first TPMI indication field is configured to determine a TPMI specified by the second TPMI indication field according to a codebook configuration parameter and a codebook subset restriction corresponding to the panel/TRP/PUSCH TO/SRS resource set associated with the first TPMI indication field; and the second TPMI indication field indicates a TPMI value of another TPMI subset obtained by renumbering the TPMI subset, corresponding to the TRI indicated by the first TPMI indication field, in a codebook configuration parameter and a codebook subset restriction associated with the second TPMI indication field.

29. The method of any one of claims 26 to 28, wherein a bit number of the second TPMI indication field is determined based on a maximum TPMI combination number corresponding to each TRI of all TRIs specified and supported by the first TPMI indication field.

30. The method of claim 26, wherein the first TPMI indication field and the second TPMI indication field respectively indicate a TPMI and TRI information in a TPMI set or a TPMI subset corresponding to a same TRI or different TRIs;

the different TRIs are different TRIs of corresponding codebook subset restrictions in respective TPMI codebook configuration tables of the first TPMI indication field and the second TPMI indication field; and
the same TRI comprises same TRIs of corresponding codebook subset restrictions in the respective TPMI codebook configuration tables of the first TPMI indication field and the second TPMI indication field.

31. The method of claim 30, wherein different TPMI indication fields in the plurality of TPMI indication fields are respectively associated with TPMI indexes and TRI information of corresponding codebook subset restrictions in respective TPMI codebook configuration tables of the different TPMI indication fields.

32. The method of claim 26, wherein different TPMI indication fields in the plurality of TPMI indication fields indicate different TPMI indexes for sending PUSCHs associated with different panels/TRPs/TCIs/SRIs/PUSCH TOs; and a TRI supported by the panel/TRP/TCI/SRI/PUSCH TO associated with the first TPMI indication field and a TRI supported by the panel/TRP/TCI/SRI/PUSCH TO associated with the second TPMI indication field are determined based on all rank combination numbers correspondingly comprised in different TPMI indication fields.

33. The method of claim 32, wherein the first TPMI indication field and the second TPMI indication field correspond to TPMI values of TPMI subsets obtained by renumbering TPMI subsets corresponding to the TRIs indicated respectively according to respective codebook configuration parameters and codebook subset restrictions of the first TPMI indication field and the second TPMI indication field.

34. The method of claim 33, wherein a bit number of the first TPMI indication field and a bit number of the second TPMI indication field are determined based on a maximum TPMI combination number corresponding to each TRI of all TRIs specified and supported by each TPMI indication field.

35. The method of any one of claims 26 to 34, wherein valid TPMI values comprised in the first TPMI indicator field and valid TPMI values comprised in the second TPMI indicator field are identical or different.

36. The method of any one of claims 26 to 35, wherein TPMI codebook configurations, allowed by different panels/TRPs/TCIs/SRIs/PUSCH TOs associated with the first TPMI indication field and the second TPMI indication field, are different from configurations of corresponding codebook subset restrictions.

37. The method of claim 28 or 33, wherein, in the another TPMI subset obtained after renumbering, regarding a specified transmission layer, first K TRI states indicated by the second TPMI indication field are mapped to K TPMI values of the specified transmission layer indicated by the first TPMI indication field, and TPMI values of other TRI states, different from the K TRI states, indicated by the second TPMI indication field are reserved values.

38. The method of any one of claims 26 to 37, wherein a TRI corresponding to the panel/TRP/TCI/SRI/PUSCH TO associated with the first TPMI indication field is the same as a TRI corresponding to the panel/TRP/TCI/SRI/PUSCH TO associated with the second TPMI indication field.

39. The method of any one of claims 30 to 36, wherein a TRI corresponding to the panel/TRP/TCI/SRI/PUSCH TO associated with the first TPMI indication field is different from a TRI corresponding to the panel/TRP/TCI/SRI/PUSCH TO associated with the second TPMI indication field.

40. The method of any one of claims 25 to 39, wherein the codebook-based PUSCH transmission from the plurality of panels to the plurality of TRPs adopts a non-coherent transmission (NC-JT) mode.

41. A precoding matrix indication apparatus, comprising:

a sending unit configured to send single downlink control information (S-DCI), wherein the S-DCI is configured to schedule codebook-based physical uplink shared channel (PUSCH) transmission of a terminal from a plurality of panels to a plurality of transmission reception points (TRPs),
wherein a transmission precoding matrix indicator (TPMI) indication field is carried in DCI scheduled by the S-DCI, and the TPMI indication field indicates TPMIs and/or transmission rank indicators (TRIs) used by the terminal for sending PUSCHs corresponding to different panels/TRPs/transmission configuration indications (TCIs)/sounding reference signal resource indicators (SRIs)/PUSCH transmission occasions (TOs).

42. A precoding matrix indication apparatus, comprising:

a receiving unit configured to receive single downlink control information (S-DCI), wherein the S-DCI is configured to schedule codebook-based physical uplink shared channel (PUSCH) transmission of the terminal from a plurality of panels to a plurality of transmission reception points (TRPs),
wherein a transmission precoding matrix indicator (TPMI) indication field is carried in DCI scheduled by the S-DCI, and the TPMI indication field indicates TPMIs and/or transmission rank indicators (TRIs) used by the terminal for sending PUSCHs corresponding to different panels/TRPs/transmission configuration indications (TCIs)/sounding reference signal resource indicators (SRIs)/PUSCH transmission occasions (TOs).

43. A precoding matrix indication apparatus, comprising:

a processor; and
a memory for storing instructions executable by the processor,
wherein the processor is configured to perform the precoding matrix indication method of any one of claims 1 to 20 or the precoding matrix indication method of any one of claims 21 to 40.

44. A storage medium, storing instructions that, when executed by a processor of a network device, cause the network device to perform the precoding matrix indication method of any one of claims 1 to 20 or the precoding matrix indication method of any one of claims 21 to 40.

FIG. 1

FIG. 2

| sending S-DCI, in which the S-DCI is configured to schedule codebook-based PUSCH transmission of a terminal from multiple panels to multiple TRPs, a TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs. | S11 |

FIG. 3

receiving S-DCI, in which the S-DCI is configured to schedule codebook-based PUSCH transmission of the terminal from multiple panels to multiple TRPs, a TPMI indication field is carried in DCI scheduled by the S-DCI, and the TPMI indication field indicates TPMIs and/or TRIs used by the terminal for sending PUSCHs corresponding to different panels/TRPs/TCIs/SRIs/PUSCH TOs.

S21

FIG. 4

**100**

sending unit

101

FIG. 5

**200**

receiving unit

201

FIG. 6

304

302    300

memory

processing
component

communication
component

316

306

power
component

processor

308

320

multimedia
component

sensor
component

314

310

audio
component

input/output (I/O)
interface

312

FIG. 7

FIG. 8

## INTERNATIONAL SEARCH REPORT

| International application No. |
| --- |
| **PCT/CN2022/111523** |

| A. | CLASSIFICATION OF SUBJECT MATTER |
| --- | --- |
| | H04W72/00(2023.01)i;H04L5/00(2006.01)i;H04L27/00(2006.01)i |

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP; IEEE: 下行控制信息, 多, 面板, 发送接收点, 物理上行共享信道, (预编码 3w 指示), 传输控制信息, 探测参考信号, 指示, 传输时机, 层数, DCI, multi+, panel, TRP, PUSCH, TPMI, TCI, SRS, indicat+, SRI, TO, RI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022029979 A1 (NTT DOCOMO INC.) 2022-02-10 (2022-02-10) description, paragraphs 50-190 | 1-44 |
| X | WO 2021194218 A1 (LG ELECTRONICS INC.) 2021-09-30 (2021-09-30) description, paragraphs 130-335 | 1-44 |
| A | US 2022053526 A1 (LG ELECTRONICS INC.) 2022-02-17 (2022-02-17) entire document | 1-44 |
| A | CN 111602346 A (HUAWEI TECHNOLOGIES CO., LTD.) 2020-08-28 (2020-08-28) entire document | 1-44 |
| X | MODERATOR (NOKIA, NOKIA SHANGHAI BELL). "Summary #2 of Multi-TRP PUCCH and PUSCH Enhancements" *3GPP TSG RAN WG1 #106-e R1-2108299*, 2021-08-24 (2021-08-24), sections 1-6 | 1-44 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 March 2023** | **17 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/111523**

| C. | DOCUMENTS CONSIDERED TO BE RELEVANT | |
|---|---|---|
| Category* | Citation of document, with indication, where appropriate, of the relevant passages | Relevant to claim No. |
| X | MODERATOR (NOKIA, NOKIA SHANGHAI BELL). "Summary #1 of Multi-TRP PUCCH and PUSCH Enhancements" *3GPP TSG RAN WG1 #106-e R1-2108298*, 2021-08-19 (2021-08-19), sections 1-5 | 1-44 |
| X | NEC. "Discussion on multi-TRP for PUCCH and PUSCH" *3GPP TSG RAN WG1 #105-e R1-2105247*, 2021-05-12 (2021-05-12), sections 1-3 | 1-44 |

Form PCT/ISA/210 (second sheet) (July 2022)

**INTERNATIONAL SEARCH REPORT**
Information on patent family members

International application No.

**PCT/CN2022/111523**

| Patent document cited in search report | | | Publication date (day/month/year) | Patent family member(s) | | | Publication date (day/month/year) |
|---|---|---|---|---|---|---|---|
| WO | 2022029979 | A1 | 10 February 2022 | None | | | |
| WO | 2021194218 | A1 | 30 September 2021 | KR | 20220157964 | A | 29 November 2022 |
| US | 2022053526 | A1 | 17 February 2022 | None | | | |
| CN | 111602346 | A | 28 August 2020 | WO | 2019140669 | A1 | 25 July 2019 |
| | | | | EP | 3720010 | A1 | 07 October 2020 |
| | | | | EP | 3720010 | A4 | 21 October 2020 |
| | | | | US | 2020350963 | A1 | 05 November 2020 |
| | | | | CN | 111602346 | B | 26 October 2021 |
| | | | | US | 11444665 | B2 | 13 September 2022 |

Form PCT/ISA/210 (patent family annex) (July 2022)